(19) Europäisches Patentamt
European Patent Office
Office européen des brevets

(11) **EP 3 587 085 A1**

(12) **EUROPÄISCHE PATENTANMELDUNG**

(43) Veröffentlichungstag:
**01.01.2020   Patentblatt 2020/01**

(51) Int Cl.:
***B29C 67/00*** *(2017.01)*

(21) Anmeldenummer: **18180213.3**

(22) Anmeldetag: **27.06.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **BASF SE**
**67056 Ludwigshafen am Rhein (DE)**

(72) Erfinder:
• **GABRIEL, Claus**
**67056 Ludwigshafen (DE)**

• **WAGNER, Sebastian**
**67056 Ludwigshafen (DE)**
• **HERLE, Natalie Beatrice Janine**
**67056 Ludwigshafen (DE)**
• **MEIER, Thomas**
**67056 Ludwigshafen (DE)**

(74) Vertreter: **Baier, Martin**
**Ellwanger & Baier**
**Patentanwälte Partnerschaftsgesellschaft**
**Friedrichsplatz 9**
**68165 Mannheim (DE)**

(54) **SINTERPULVER ENTHALTEND EINEN MEHRWERTIGEN ALKOHOL ZUR HERSTELLUNG VON FORMKÖRPERN**

(57)     Die vorliegende Erfindung betrifft ein Verfahren zur Herstellung eines Formkörpers, wobei in Schritt i) eine Schicht eines Sinterpulvers (SP), das unter anderem mindestens einen mehrwertigen Alkohol enthält, bereitgestellt wird und in Schritt ii) die in Schritt i) bereitgestellte Schicht belichtet wird. Des Weiteren betrifft die vorliegende Erfindung ein Verfahren zur Herstellung eines Sinterpulvers (SP) sowie ein Sinterpulver (SP) erhältlich nach diesem Verfahren. Außerdem betrifft die vorliegende Erfindung die Verwendung des Sinterpulvers (SP) in einem Sinterverfahren sowie Formkörper, erhältlich nach dem erfindungsgemäßen Verfahren.

EP 3 587 085 A1

**Beschreibung**

Die vorliegende Erfindung betrifft ein Verfahren zur Herstellung eines Formkörpers, wobei in Schritt i) eine Schicht eines Sinterpulvers (SP), das unter anderem mindestens einen mehrwertigen Alkohol enthält, bereitgestellt wird und in Schritt ii) die in Schritt i) bereitgestellte Schicht belichtet wird. Des Weiteren betrifft die vorliegende Erfindung ein Verfahren zur Herstellung eines Sinterpulvers (SP) sowie ein Sinterpulver (SP) erhältlich nach diesem Verfahren. Außerdem betrifft die vorliegende Erfindung die Verwendung des Sinterpulvers (SP) in einem Sinterverfahren sowie Formkörper, erhältlich nach dem erfindungsgemäßen Verfahren.

Die schnelle Bereitstellung von Prototypen ist eine in der jüngsten Zeit häufig gestellte Aufgabe. Ein Verfahren, das für dieses sogenannte "rapid prototyping" besonders geeignet ist, ist das selektive Lasersintern (SLS). Dabei wird ein Kunststoffpulver in einer Kammer selektiv mit einem Laserstrahl belichtet. Das Pulver schmilzt auf, die geschmolzenen Partikel laufen ineinander und erstarren wieder. Wiederholtes Aufbringen von Kunststoffpulver und anschließendes Belichten mit einem Laser ermöglicht die Modellierung von dreidimensionalen Formkörpern.

Das Verfahren des selektiven Lasersinterns zur Herstellung von Formkörpern aus pulverförmigen Polymeren wird ausführlich in den Patentschriften US 6,136,948 und WO 96/06881 beschrieben.

Das selektive Lasersintern ist für die Herstellung einer größeren Anzahl an Formkörpern häufig zu zeitintensiv, so dass zur Herstellung von größeren Mengen an Formkörpern das High-Speed Sintern (HSS) oder die sogenannte Multijet Fusion Technologie (MJF) von HP eingesetzt werden kann. Beim High-Speed Sintern wird durch Aufsprühen einer infrarotabsorbierenden Tinte auf den zu versinternden Bauteilquerschnitt und anschließendes Belichten mit einem Infrarotstrahler eine höhere Verarbeitungsgeschwindigkeit, verglichen mit dem selektiven Lasersintern, erzielt.

Problematisch sowohl beim High-Speed Sintern bzw. der Multijet Fusion Technologie als auch beim selektiven Lasersintern ist, dass die erhaltenen Formkörper häufig eine geringe Wärmealterungsbeständigkeit aufweisen, das heißt, die erhaltenen Formkörper zeigen nach Wärmelagerung eine geringe Zugfestigkeit sowie eine geringe Bruchdehnung.

Aus WO 2010/014801 A1 ist es bekannt, wärmebeständige Polyamidformkörper herzustellen, bei denen dem Polyamid mehrwertige Alkohole, wie Pentaerythrit, Dipentaerythrit, Tripentaerythrit, Di-Trimethylolpropan, D-Mannit, D-Sorbit oder Xylit, beigemischt werden. Auch Polyamidmischungen können eingesetzt werden. Gemäß den Ausführungsbeispielen enthalten die Polyamidmischungen einen größeren Anteil eines zumindest teilaromatischen Polyamids und einen geringeren Anteil eines aliphatischen Polyamids. In WO 2011/094553 A2 werden entsprechende Polyhydroxypolymere für vergleichbare Anwendungen beschrieben.

WO 2010/014785 A1 betrifft wärmebeständige thermoplastische Artikel mit Co-Stabilisatoren. Die Artikel werden aus Polyamid-Zusammensetzungen hergestellt, die mindestens einen mehrwertigen Alkohol mit mehr als zwei Hydroxylgruppen und einem zahlenmittleren Molekulargewicht (Mn) von weniger als 2000 g/mol sowie Co-Stabilisatoren enthalten, die ausgewählt sind aus sekundären Arylaminen und gehinderten Amin-Lichtstabilisatoren (HALS) sowie Gemischen davon. Zudem sind Verstärkungsmittel im Polyamidharz enthalten.

Keines der aufgeführten Dokumente beschreibt Anwendungen im 3D Druck.

Die der vorliegenden Erfindung zugrunde liegende Aufgabe bestand somit darin, ein Verfahren zur Herstellung von Formkörpern bereitzustellen, das die vorgenannten Nachteile der im Stand der Technik beschriebenen Verfahren nicht oder nur in vermindertem Maße aufweist. Das Verfahren sollte zudem einfach und kostengünstig durchführbar sein.

Gelöst wird diese Aufgabe durch ein Verfahren zur Herstellung eines Formkörpers, umfassend die Schritte:

   i) Bereitstellen einer Schicht eines Sinterpulvers (SP), das die Komponenten

      (A) mindestens ein teilkristallines Polyamid,
      (B) mindestens ein amorphes Polyamid,
      (C) mindestens einen mehrwertigen Alkohol,
      (D) gegebenenfalls mindestens ein Additiv,
      (E) gegebenenfalls mindestens ein Verstärkungsmittel und
      (F) gegebenenfalls mindestens ein mineralisches Flammschutzmittel

   enthält,

   ii) Belichten der in Schritt i) bereitgestellten Schicht des Sinterpulvers (SP).

Es wurde überraschend gefunden, dass Formkörper, die mit dem erfindungsgemäßen Verfahren hergestellt worden sind, eine besonders hohe Wärmealterungsbeständigkeit und in manchen Fällen eine besonders gute Wärmeformbeständigkeit aufweisen. Nach Wärmelagerung zeigen diese eine hohe Zugfestigkeit sowie eine hohe Bruchdehnung gegenüber Formkörpern, die keine Komponente (C) enthalten.

Zudem ist die Rezyklierbarkeit des im erfindungsgemäßen Verfahren eingesetzten Sinterpulvers (SP) auch nach thermischer Alterung hoch. Dies bedeutet, dass bei der Herstellung des Formkörpers nicht aufgeschmolzenes Sinterpulver (SP) wiederverwendet werden kann. Das Sinterpulver (SP) besitzt auch nach mehreren Lasersinterzyklen ähnlich vorteilhafte Sintereigenschaften wie beim ersten Sinterzyklus.

Des Weiteren ist das erfindungsgemäße Verfahren gut als selektives Lasersinterverfahren sowie als High-Speed Sinterverfahren bzw. als Multi-Jet-Fusion Verfahren geeignet, da das erfindungsgemäß eingesetzte Sinterpulver (SP) ein breites Sinterfenster aufweist.

Enthält das erfindungsgemäße Sinterpulver (SP) mindestens ein Verstärkungsmittel (Komponente (E)), weisen die mit dem erfindungsgemäßen Verfahren hergestellten Formkörper in manchen Fällen zusätzlich eine erhöhte Bruchdehnung auf gegenüber Formkörpern, die keine Komponente (E) enthalten.

Enthält das erfindungsgemäße Sinterpulver (SP) mindestens ein mineralisches Flammschutzmittel (Komponente (F)), weisen die mit dem erfindungsgemäßen Verfahren hergestellten Formkörper ein besonders gutes Flammschutzniveau gemäß UL 94 auf, ohne dass die übrigen Eigenschaften der Formkörper negativ beeinflusst werden.

Nachfolgend wird das erfindungsgemäße Verfahren näher erläutert.

Schritt i)

In Schritt i) wird eine Schicht des Sinterpulvers (SP) bereitgestellt.

Die Schicht des Sinterpulvers (SP) kann nach allen dem Fachmann bekannten Methoden bereitgestellt werden. Üblicherweise wird die Schicht des Sinterpulvers (SP) in einem Bauraum auf einer Bauplattform bereitgestellt. Der Bauraum kann gegebenenfalls temperiert werden.

Der Bauraum weist beispielsweise eine Temperatur auf, die im Bereich von 1 bis 100 K (Kelvin) unterhalb der Schmelztemperatur (TM) des Sinterpulvers (SP) liegt, bevorzugt eine Temperatur, die im Bereich von 5 bis 50 K unterhalb der Schmelztemperatur (TM) des Sinterpulvers (SP) liegt, und insbesondere bevorzugt eine Temperatur, die im Bereich von 10 bis 25 K unterhalb der Schmelztemperatur (TM) des Sinterpulvers (SP) liegt.

Der Bauraum weist beispielsweise eine Temperatur im Bereich von 150 bis 250 °C, bevorzugt im Bereich von 160 bis 230 °C und insbesondere bevorzugt im Bereich von 170 bis 210 °C auf.

Das Bereitstellen der Schicht des Sinterpulvers (SP) kann nach allen dem Fachmann bekannten Methoden erfolgen. Beispielsweise wird die Schicht des Sinterpulvers (SP) durch eine Rakel oder eine Walze in der zu erzielenden Dicke in dem Bauraum bereitgestellt.

Die Dicke der Schicht des Sinterpulvers (SP), die in Schritt i) bereitgestellt wird, kann beliebig sein. Beispielsweise liegt sie im Bereich von 50 bis 300 $\mu$m, bevorzugt im Bereich von 70 bis 200 $\mu$m und insbesondere bevorzugt im Bereich von 90 bis 150 $\mu$m.

Sinterpulver (SP)

Erfindungsgemäß enthält das Sinterpulver (SP) als Komponente (A) mindestens ein teilkristallines Polyamid, als Komponente (B) mindestens ein amorphes Polyamid und als Komponente (C) mindestens einen mehrwertigen Alkohol, gegebenenfalls als Komponente (D) mindestens ein Additiv, gegebenenfalls als Komponente (E) mindestens ein Verstärkungsmittel und gegebenenfalls als Komponente (F) mindestens ein mineralisches Flammschutzmittel.

Gegenstand der vorliegenden Erfindung ist daher auch ein Sinterpulver, welches die Komponenten

(A) mindestens ein teilkristallines Polyamid,
(B) mindestens ein amorphes Polyamid,
(C) mindestens einen mehrwertigen Alkohol,
(D) gegebenenfalls mindestens ein Additiv,
(E) gegebenenfalls mindestens ein Verstärkungsmittel und
(F) gegebenenfalls mindestens ein mineralisches Flammschutzmittel

enthält.

Im Rahmen der vorliegenden Erfindung werden die Begriffe "Komponente (A)" und "mindestens ein teilkristallines Polyamid" synonym gebraucht und besitzen daher die gleiche Bedeutung.

Entsprechendes gilt für die Begriffe "Komponente (B)" und "mindestens ein amorphes Polyamid". Diese Begriffe werden im Rahmen der vorliegenden Erfindung ebenfalls synonym gebraucht und besitzen daher die gleiche Bedeutung.

Dementsprechend werden auch die Begriffe "Komponente (C)" und "mindestens ein mehrwertiger Alkohol", "Komponente (D)" und "mindestens ein Additiv", "Komponente (E)" und "mindestens ein Verstärkungsmittel" und "Komponente (F)" und "mindestens ein mineralisches Flammschutzmittel" im Rahmen der vorliegenden Erfindung synonym gebraucht und besitzen die gleiche Bedeutung.

Das Sinterpulver (SP) kann die Komponenten (A), (B) und (C) sowie gegebenenfalls (D), (E) und (F) in beliebigen Mengen enthalten.

Beispielsweise enthält das Sinterpulver (SP) im Bereich von 35 bis 96,95 Gew.-% der Komponente (A), im Bereich von 3 bis 45 Gew.-% der Komponente (B), im Bereich von 0,05 bis 20 Gew.-% der Komponente (C), im Bereich von 0 bis 10 Gew.-% der Komponente (D), im Bereich von 0 bis 44,95 Gew.-% der Komponente (E) und im Bereich von 0 bis 60 Gew.-% der Komponente (F), jeweils bezogen auf die Summe der Gewichtsprozente der Komponenten (A), (B), (C), (D), (E) und (F), bevorzugt bezogen auf das Gesamtgewicht des Sinterpulvers (SP).

Bevorzugt enthält das Sinterpulver (SP) im Bereich von 45 bis 91,6 Gew.-% der Komponente (A), im Bereich von 8 bis 40 Gew.-% der Komponente (B), im Bereich von 0,1 bis 12,5 Gew.-% der Komponente (C), im Bereich von 0,3 bis 2,5 Gew.-% der Komponente (D), im Bereich von 0 bis 40 Gew.-% der Komponente (E) und im Bereich von 0 bis 50 Gew.-% der Komponente (F), jeweils bezogen auf die Summe der Gewichtsprozente der Komponenten (A), (B), (C), (D), (E) und (F), bevorzugt bezogen auf das Gesamtgewicht des Sinterpulvers (SP).

Am meisten bevorzugt enthält das Sinterpulver (SP) im Bereich von 53 bis 89,6 Gew.-% der Komponente (A), im Bereich von 10 bis 35 Gew.-% der Komponente (B), im Bereich von 0,1 bis 10 Gew.-% der Komponente (C), im Bereich von 0,3 bis 2 Gew.-% der Komponente (D), im Bereich von 0 bis 40 Gew.-% der Komponente (E) und im Bereich von 0 bis 40 Gew.-% der Komponente (F), jeweils bezogen auf die Summe der Gewichtsprozente der Komponenten (A), (B), (C), (D), (E) und (F), bevorzugt bezogen auf das Gesamtgewicht des Sinterpulvers (SP).

Gegenstand der vorliegenden Erfindung ist daher auch ein Verfahren, bei dem das Sinterpulver (SP) im Bereich von 35 bis 96,95 Gew.-% der Komponente (A), im Bereich von 3 bis 45 Gew.-% der Komponente (B), im Bereich von 0,05 bis 20 Gew.-% der Komponente (C), im Bereich von 0 bis 10 Gew.-% der Komponente (D), im Bereich von 0 bis 44,95 Gew.-% der Komponente (E) und im Bereich von 0 bis 60 Gew.-% der Komponente (F) enthält, jeweils bezogen auf das Gesamtgewicht des Sinterpulvers (SP).

Die Gewichtsprozente der Komponenten (A), (B) und (C) sowie gegebenenfalls der Komponenten (D), (E) und (F) addieren sich üblicherweise zu 100 Gew.-%.

Das Sinterpulver (SP) weist Partikel auf. Diese Partikel haben beispielsweise eine Größe im Bereich von 10 bis 250 $\mu$m, bevorzugt im Bereich von 15 bis 200 $\mu$m, besonders bevorzugt im Bereich von 20 bis 120 $\mu$m und insbesondere bevorzugt im Bereich von 20 bis 110 $\mu$m.

Das erfindungsgemäße Sinterpulver (SP) weist beispielsweise

einen D10-Wert im Bereich von 10 bis 60 $\mu$m,

einen D50-Wert im Bereich von 25 bis 90 $\mu$m und

einen D90-Wert im Bereich von 50 bis 150 $\mu$m auf.

Bevorzugt weist das erfindungsgemäße Sinterpulver (SP)

einen D10-Wert im Bereich von 20 bis 50 $\mu$m,

einen D50-Wert im Bereich von 40 bis 80 $\mu$m und

einen D90-Wert im Bereich von 80 bis 125 $\mu$m auf.

Gegenstand der vorliegenden Erfindung ist daher auch ein Verfahren, bei dem das Sinterpulver (SP)

einen D10-Wert im Bereich von 10 bis 60 $\mu$m,

einen D50-Wert im Bereich von 25 bis 90 $\mu$m und

einen D90-Wert im Bereich von 50 bis 150 $\mu$m

aufweist.

Gegenstand der vorliegenden Erfindung ist daher auch ein Sinterpulver (SP), das eine mittlere Partikelgröße ($D_{50}$-Wert) im Bereich von 40 bis 80 $\mu$m aufweist

Unter dem "D10-Wert" wird im Rahmen der vorliegenden Erfindung die Partikelgröße verstanden, bei der 10 Vol.-% der Partikel bezogen auf das Gesamtvolumen der Partikel kleiner oder gleich dem D10-Wert sind und 90 Vol.-% der Partikel bezogen auf das Gesamtvolumen der Partikel größer als der D10-Wert sind. In Analogie dazu wird unter dem "D50-Wert" die Partikelgröße verstanden, bei der 50 Vol.-% der Partikel bezogen auf das Gesamtvolumen der Partikel kleiner oder gleich dem D50-Wert sind und 50 Vol.-% der Partikel bezogen auf das Gesamtvolumen der Partikel größer als der D50-Wert sind. Entsprechend wird unter dem "D90-Wert" die Partikelgröße verstanden, bei der 90 Vol.-% der Partikel bezogen auf das Gesamtvolumen der Partikel kleiner oder gleich dem D90-Wert sind und 10 Vol.-% der Partikel bezogen auf das Gesamtvolumen der Partikel größer als der D90-Wert sind.

Zur Ermittlung der Partikelgrößen wird das Sinterpulver (SP) trocken mittels Druckluft oder in einem Lösungsmittel, wie beispielsweise Wasser oder Ethanol, suspendiert und diese Suspension vermessen. Die Bestimmung des D10-, D50- und D90-Wertes erfolgt mittels Laserbeugung unter Verwendung eines Master Sizers 3000 der Firma Malvern. Die Auswertung erfolgt mittels Fraunhofer-Beugung.

Das Sinterpulver (SP) weist üblicherweise eine Schmelztemperatur (TM) im Bereich von 160 bis 280 °C auf. Bevorzugt liegt die Schmelztemperatur (TM) des Sinterpulvers (SP) im Bereich von 170 bis 270 °C und insbesondere bevorzugt im Bereich von 175 bis 265 °C.

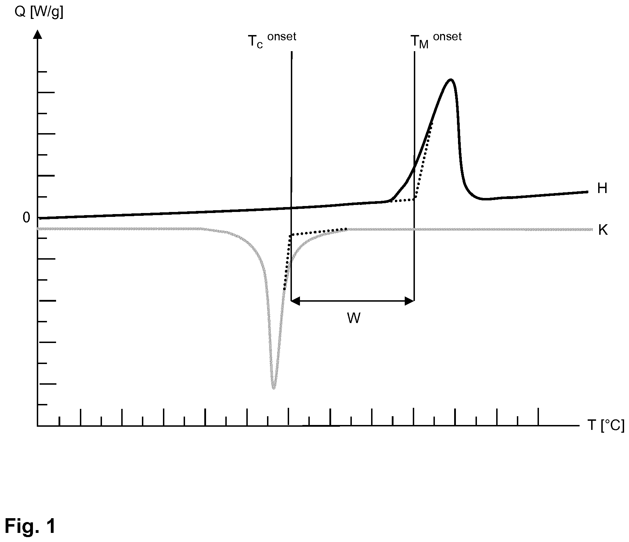

Die Schmelztemperatur ($T_M$) wird im Rahmen der vorliegenden Erfindung bestimmt mittels dynamischer Differenzkalorimetrie (DDK; Differential Scanning Calorimetry, DSC). Es werden üblicherweise ein Heizlauf (H) und ein Kühllauf (K), jeweils mit einer Heizrate bzw. Kühlrate von 20 K/min, gemessen. Dabei wird ein DSC-Diagramm, wie es in Figur 1 beispielhaft gezeigt ist, erhalten. Unter der Schmelztemperatur ($T_M$) wird dann die Temperatur verstanden, bei der der Aufschmelzpeak des Heizlaufs (H) des DSC-Diagramms ein Maximum aufweist.

Das Sinterpulver (SP) weist außerdem üblicherweise eine Kristallisationstemperatur ($T_C$) im Bereich von 120 bis 250 °C auf. Bevorzugt liegt die Kristallisationstemperatur ($T_C$) des Sinterpulvers (SP) im Bereich von 130 bis 240 °C und insbesondere bevorzugt im Bereich von 140 bis 235 °C.

Die Kristallisationstemperatur ($T_C$) wird im Rahmen der vorliegenden Erfindung mittels dynamischer Differenzkalorimetrie (DDK; Differential Scanning Calorimetry, DSC) bestimmt. Dabei werden üblicherweise ein Heizlauf (H) und ein Kühllauf (K), jeweils mit einer Heizrate und einer Kühlrate von 20 K/min, gemessen. Dabei wird ein DSC-Diagramm, wie es in der Figur 1 beispielhaft gezeigt ist, erhalten. Die Kristallisationstemperatur ($T_C$) ist dann die Temperatur am Minimum des Kristallisationspeaks der DSC-Kurve.

Das Sinterpulver (SP) weist außerdem üblicherweise ein Sinterfenster ($W_{SP}$) auf. Das Sinterfenster ($W_{SP}$) ist, wie nachfolgend beschrieben, die Differenz zwischen der Onset-Temperatur des Aufschmelzens ($T_M^{onset}$) und der Onset-Temperatur der Kristallisation ($T_C^{onset}$). Die Onset-Temperatur des Aufschmelzens ($T_M^{onset}$) und die Onset-Temperatur der Kristallisation ($T_C^{onset}$) werden wie nachfolgend beschrieben bestimmt.

Das Sinterfenster ($W_{SP}$) des Sinterpulvers (SP) liegt beispielsweise im Bereich von 10 bis 40 K (Kelvin), besonders bevorzugt im Bereich von 15 bis 35 K und insbesondere bevorzugt im Bereich von 18 bis 30 K.

Das Sinterpulver (SP) kann nach allen dem Fachmann bekannten Methoden hergestellt werden. Beispielsweise wird das Sinterpulver durch Vermahlen oder durch Fällung hergestellt.

Wird das Sinterpulver durch Fällung hergestellt, so werden üblicherweise zunächst ein Polyamid sowie gegebenenfalls Zusatzstoffe und/oder Additive mit einem Lösungsmittel gemischt und das Polyamid gegebenenfalls unter Erwärmen in dem Lösungsmittel unter Erhalt einer Polyamid-Lösung gelöst. Die Fällung des Sinterpulvers erfolgt anschließend beispielsweise dadurch, dass die Polyamid-Lösung abgekühlt wird, das Lösungsmittel aus der Polyamid-Lösung abdestilliert wird oder ein Fällungsmittel zu der Polyamid-Lösung gegeben wird.

Das Vermahlen kann nach allen dem Fachmann bekannten Methoden durchgeführt werden, beispielsweise werden die Komponenten (A), (B) und (C) sowie gegebenenfalls (D), (E) und (F) in eine Mühle gegeben und darin vermahlen.

Als Mühle eignen sich alle dem Fachmann bekannten Mühlen, beispielsweise Sichtermühlen, Gegenstrahlmühlen, Hammermühlen, Kugelmühlen, Schwingmühlen oder Rotormühlen wie Stiftmühlen und Wirbelstrommühlen.

Das Mahlen in der Mühle kann ebenfalls nach allen dem Fachmann bekannten Methoden erfolgen. Beispielsweise kann die Mahlung unter Inertgas stattfinden und/oder unter Kühlung mit flüssigem Stickstoff. Die Kühlung mit flüssigem Stickstoff ist bevorzugt. Die Temperatur bei der Mahlung ist beliebig, bevorzugt wird die Mahlung bei Temperaturen von flüssigem Stickstoff durchgeführt, beispielsweise bei einer Temperatur im Bereich von -210 bis -195 °C. Die Temperatur der Komponenten beim Vermahlen liegt dann beispielsweise im Bereich von -40 bis -30°C.

Bevorzugt werden zunächst die Komponenten miteinander gemischt und anschließend gemahlen. Das Verfahren zur Herstellung des Sinterpulvers (SP) umfasst dann vorzugsweise die Schritte

    a) Mischen der Komponenten

        (A) mindestens ein teilkristallines Polyamid,
        (B) mindestens ein amorphes Polyamid,
        (C) mindestens einen mehrwertigen Alkohol,
        (D) gegebenenfalls mindestens ein Additiv,
        (E) gegebenenfalls mindestens ein Verstärkungsmittel und
        (F) gegebenenfalls mindestens ein mineralisches Flammschutzmittel,

    b) Mahlen der in Schritt a) erhaltenen Mischung unter Erhalt des Sinterpulvers (SP).

Gegenstand der vorliegenden Erfindung ist daher auch ein Verfahren zur Herstellung eines Sinterpulvers (SP), umfassend die Schritte

    a) Bereitstellen der Komponenten

        (A) mindestens ein teilkristallines Polyamid,
        (B) mindestens ein amorphes Polyamid,
        (C) mindestens einen mehrwertigen Alkohol,
        (D) gegebenenfalls mindestens ein Additiv,

(E) gegebenenfalls mindestens ein Verstärkungsmittel und

(F) gegebenenfalls mindestens ein mineralisches Flammschutzmittel,

b) Mahlen der in Schritt a) erhaltenen Mischung unter Erhalt des Sinterpulvers (SP).

In einer bevorzugten Ausführungsform umfasst das Verfahren zur Herstellung des Sinterpulvers (SP) die folgenden Schritte:

ai) Bereitstellen der Komponenten

(A) mindestens ein teilkristallines Polyamid,

(B) mindestens ein amorphes Polyamid,

(C) mindestens einen mehrwertigen Alkohol,

(D) gegebenenfalls mindestens ein Additiv,

(E) gegebenenfalls mindestens ein Verstärkungsmittel und

(F) gegebenenfalls mindestens ein mineralisches Flammschutzmittel,

bi) Mahlen der in Schritt ai) erhaltenen Mischung unter Erhalt eines Polyamidpulvers,

bii) Mischen des in Schritt bi) erhaltenen Polyamidpulvers mit einer Rieselhilfe unter Erhalt des Sinterpulvers (SP).

Geeignete Rieselhilfen sind beispielsweise Kieselsäuren oder Aluminiumoxide. Als Rieselhilfe bevorzugt ist Aluminiumoxid. Ein geeignetes Aluminiumoxid ist beispielsweise Aeroxide® Alu C der Firma Evonik.

Für den Fall, dass das Sinterpulver (SP) eine Rieselhilfe enthält, wird diese bevorzugt in Verfahrensschritt bii) zugegeben. Das Sinterpulver (SP) enthält in einer Ausführungsform 0,1 bis 1 Gew.-%, bevorzugt 0,2 bis 0,8 Gew.-% und besonders bevorzugt 0,3 bis 0,6 Gew.-% Rieselhilfe, jeweils bezogen auf das Gesamtgewicht des Sinterpulvers (SP) und der Rieselhilfe.

Verfahren zur Compoundierung (zum Mischen) in Schritt a) sind dem Fachmann als solche bekannt. Beispielsweise kann das Mischen in einem Extruder erfolgen, insbesondere bevorzugt in einem Doppelschneckenextruder.

Für das Mahlen in Schritt b) gelten die zuvor beschriebenen Ausführungen und Bevorzugungen im Hinblick auf das Mahlen entsprechend.

Ein weiterer Gegenstand der vorliegenden Erfindung ist daher auch das Sinterpulver (SP), erhältlich nach dem erfindungsgemäßen Verfahren.

Falls das Sinterpulver (SP) die Komponente (F) enthält, ist die Komponente (F) mit der Komponente (A) und/oder der Komponente (B) beschichtet.

Die Komponente (F) ist insbesondere dann mit der Komponente (A) und/oder der Komponente (B) beschichtet, wenn zur Herstellung des Sinterpulvers (SP) die Komponenten (A), (B), (C) und (F) sowie gegebenenfalls (D) und (E) zunächst miteinander vermischt (compoundiert) werden, bevorzugt wenn das Sinterpulver (SP) hergestellt wird durch das vorstehend beschriebene Verfahren, umfassend die Schritte a) und b).

In einer weiteren Ausführungsform der vorliegenden Erfindung liegt das Sinterpulver (SP) als Gemisch vor. Anders ausgedrückt, liegen in dieser Ausführungsform die Komponenten (A), (B), (C) und (F) sowie gegebenenfalls (D) und (E) nebeneinander vor und die Komponente (F) ist nicht mit der Komponente (A) und/oder der Komponente (B) beschichtet.

Selbstverständlich ist es auch möglich, dass ein Teil der Komponente (F) mit der Komponente (A) und/oder der Komponente (B) beschichtet ist und dass ein anderer Teil der Komponente (F) nicht mit der Komponente (A) und/oder der Komponente (B) beschichtet ist.

Komponente (A)

Erfindungsgemäß ist die Komponente (A) mindestens ein teilkristallines Polyamid.

"Mindestens ein teilkristallines Polyamid" bedeutet im Rahmen der vorliegenden Erfindung sowohl genau ein teilkristallines Polyamid als auch eine Mischung aus zwei oder mehreren teilkristallinen Polyamiden.

"Teilkristallin" bedeutet im Rahmen der vorliegenden Erfindung, dass das Polyamid eine Schmelzenthalpie $\Delta H2(A)$ von größer als 45 J/g, bevorzugt von größer als 50 J/g und insbesondere bevorzugt von größer als 55 J/g aufweist, jeweils gemessen mittels dynamischer Differenzkalorimetrie (differential scanning calorimetry; DSC) gemäß ISO 11357-4:2014.

Das erfindungsgemäße mindestens eine teilkristalline Polyamid (A) weist also üblicherweise eine Schmelzenthalpie $\Delta H2_{(A)}$ von größer als 45 J/g, bevorzugt von größer als 50 J/g und insbesondere bevorzugt von größer als 55 J/g auf, jeweils gemessen mittels dynamischer Differenzkalorimetrie (differential scanning calorimetry; DSC) gemäß ISO 11357-4:2014.

Das erfindungsgemäße mindestens eine teilkristalline Polyamid (A) weist üblicherweise eine Schmelzenthalpie $\Delta H2_{(A)}$ von weniger als 200 J/g, bevorzugt von weniger als 150 J/g und insbesondere bevorzugt von weniger als 100 J/g auf, jeweils gemessen mittels dynamischer Differenzkalorimetrie (differential scanning calorimetry; DSC) gemäß ISO 11357-4:2014.

Geeignete teilkristalline Polyamide (A) weisen im Allgemeinen eine Viskositätszahl (VZ(A)) im Bereich von 90 bis 350 ml/g, vorzugsweise im Bereich von 100 bis 275 ml/g und insbesondere bevorzugt im Bereich von 110 bis 250 ml/g auf, bestimmt in einer 0,5 Gew.-%igen Lösung von 96 Gew.-%iger Schwefelsäure bei 25 °C, gemessen gemäß ISO 307:2013-8.

Die erfindungsgemäße Komponente (A) weist üblicherweise eine Schmelztemperatur $(T_{M(A)})$ auf. Bevorzugt liegt die Schmelztemperatur $(T_{M(A)})$ der Komponente (A) im Bereich von 160 bis 280 °C, besonders bevorzugt im Bereich von 170 bis 270 °C und insbesondere bevorzugt im Bereich von 175 bis 265 °C, bestimmt nach ISO 11357-3:2014.

Geeignete Komponenten (A) weisen ein gewichtsmittleres Molekulargewicht $(M_{W(A)})$ im Bereich von 500 bis 2 000 000 g/mol auf, bevorzugt im Bereich von 10 000 bis 90 000 g/mol und insbesondere bevorzugt im Bereich von 20 000 bis 70000 g/mol. Das gewichtsmittlere Molekulargewitch $(M_{W(A)})$ wird bestimmt mittels SEC-MALLS (Size Exclusion Chromatography-Multi-Angle Laser Light Scattering) nach Chi-san Wu "Handbook of size exclusion chromatography and related techniques", Seite 19.

Als das mindestens eine teilkristalline Polyamid (A) sind beispielsweise teilkristalline Polyamide (A) geeignet, die sich von Lactamen mit 4 bis 12 Ringgliedern ableiten. Weiterhin sind teilkristalline Polyamide (A) geeignet, die durch Umsetzung von Dicarbonsäuren mit Diaminen erhalten werden. Als mindestens ein teilkristallines Polyamid (A), das sich von Lactam ableitet, sind beispielhaft Polyamide erwähnt, die sich von Polycaprolactam, Polycapryllactam und/oder Polylaurinlactam ableiten.

Für den Fall, dass mindestens ein teilkristallines Polyamid (A) eingesetzt wird, das aus Dicarbonsäuren und Diaminen erhältlich ist, können als Dicarbonsäuren Alkandicarbonsäuren mit 6 bis 12 Kohlenstoffatomen eingesetzt werden. Darüber hinaus sind aromatische Dicarbonsäuren geeignet.

Beispielhaft seien hier Adipinsäure, Azelainsäure, Sebacinsäure und Dodecandicarbonsäure als Dicarbonsäuren genannt.

Als Diamine eignen sich beispielsweise Alkandiamine mit 4 bis 12 Kohlenstoffatomen sowie aromatische oder zyklische Diamine, wie beispielsweise m-Xylylendiamin, Di-(4-Aminophenyl)Methan, Di-(4-Aminocyclohexyl)-Methan, 2,2-Di-(4-aminophenyl)-Propan oder 2,2-Di-(4-Aminocyclohexyl)-Propan.

Bevorzugt als Komponente (A) sind Polycaprolactam (Polyamid 6) sowie Copolyamid 6/66 (Polyamid 6/6.6). Copolyamid 6/66 weist vorzugsweise einen Anteil von 5 bis 95 Gew.-% an Caprolactameinheiten auf, bezogen auf das Gesamtgewicht des Copolyamids 6/66.

Weiterhin als mindestens ein teilkristallines Polyamid (P) geeignet sind Polyamide, die durch Copolymerisation zweier oder mehrerer der vorstehend und nachstehend genannten Monomere erhältlich sind oder Mischungen mehrerer Polyamide, wobei das Mischungsverhältnis beliebig ist. Besonders bevorzugt sind Mischungen von Polyamid 6 mit anderen Polyamiden, insbesondere Copolyamid 6/66. Weiterhin bevorzugt als Komponente (A) sind Polyamid 66 und Polyamid 6.10.

Die nachfolgende, nicht abschließende Aufstellung enthält die vorstehend genannnten sowie weitere geeignete teilkristalline Polyamide (A) sowie die enthaltenen Monomere.

AB-Polymere:

PA 4     Pyrrolidon
PA 6     ε-Caprolactam
PA 7     Enantholactam
PA 8     Capryllactam
PA 9     9-Aminopelargonsäure
P 11     11-Aminoundecansäure
P 12     Laurinlactam

AA/BB-Polymere:

| | |
|---|---|
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA MXD6 | m-Xylendiamin, Adipinsäure |
| PA 6/66 | (siehe PA 6 und PA 66) |
| PA 6/12 | (siehe PA 6 und PA 12) |
| PA 6/6.36 | ε-Caprolactam, Hexamethylendiamin, C36-Dimersäure |
| PA 6T/6 | (siehe PA 6T und PA 6) |

Bevorzugt ist die Komponente (A) ausgewählt aus der Gruppe bestehend aus PA 4, PA 6, PA 7, PA 8, PA 9, PA 11, PA 12, PA 46, PA 66, PA 69, PA 6.10, PA 6.12, PA 6.13, PA 6/6.36, PA 6T/6, PA 12.12, PA 13.13, PA 6T, PA MXD6, PA 6/66, PA 6/12 und Copolyamiden aus diesen.

Gegenstand der vorliegenden Erfindung ist daher auch ein Verfahren bei dem die Komponente (A) ausgewählt ist aus der Gruppe, bestehend aus PA 4, PA 6, PA 7, PA 8, PA 9, PA 11, PA 12, PA 46, PA 66, PA 69, PA 6.10, PA 6.12, PA 6.13, PA 6/6.36, PA 6T/6, PA 12.12, PA 13.13, PA 6T, PA MXD6, PA 6/66, PA 6/12 und Copolyamiden aus diesen.

Am meisten bevorzugt ist die Komponente (A) ausgewählt aus der Gruppe bestehend aus Polyamid 6, Polyamid 12 und Polyamid 6/66 sowie Polyamid 6.10 und Polyamid 66.

Komponente (B)

Die Komponente (B) ist mindestens ein amorphes Polyamid.

"Mindestens ein amorphes Polyamid" bedeutet im Rahmen der vorliegenden Erfindung sowohl genau ein amorphes Polyamid als auch eine Mischung aus zwei oder mehreren amorphen Polyamiden.

"Amorph" bedeutet im Rahmen der vorliegenden Erfindung, dass das Polyamid bei der dynamischen Differenzkalorimetrie (Differential Scanning Calorimetry; DSC), gemessen gemäß ISO 11357, keinen Schmelzpunkt aufweist.

"Kein Schmelzpunkt" bedeutet, dass die Schmelzenthalpie des amorphen Polyamids $\Delta H2_{(B)}$ kleiner als 10 J/g, bevorzugt kleiner als 8 J/g und insbesondere bevorzugt kleiner als 5 J/g ist, jeweils gemessen mittels dynamischer Differenzkalorimetrie (DDK; Differential Scanning Calorimetry, DSC) gemäß ISO 11357-4: 2014.

Das erfindungsgemäße mindestens eine amorphe Polyamid (B) weist also üblicherweise eine Schmelzenthalpie $\Delta H2_{(B)}$ von kleiner als 10 J/g, bevorzugt von kleiner als 8 J/g und insbesondere bevorzugt von kleiner als 5 J/g auf, jeweils gemessen mittels dynamischer Differenzkalorimetrie (DDK; Differential Scanning Calorimetry, DSC) gemäß ISO 11357-4: 2014.

Geeignete amorphe Polyamide weisen im Allgemeinen eine Viskositätszahl ($VZ_{(B)}$) im Bereich von 60 bis 200 ml/g, bevorzugt im Bereich von 70 bis 150 ml/g und insbesondere bevorzugt im Bereich von 75 bis 125 ml/g auf, bestimmt in einer 0,5 Gew.-%igen Lösung der Komponente (B) in 96 Gew.-%iger Schwefelsäure bei 25 °C gemäß ISO 307: 2013-08.

Die erfindungsgemäße Komponente (B) weist üblicherweise eine Glasübergangstemperatur ($T_{G(B)}$) auf, wobei die Glasübergangstemperatur ($T_{G(B)}$) üblicherweise im Bereich von 100 bis 180 °C, bevorzugt im Bereich von 110 bis 160 °C und insbesondere bevorzugt im Bereich von 120 bis 155 °C liegt, bestimmt mittels ISO 11357-2: 2014.

Geeignete Komponenten (B) weisen ein gewichtsmittleres Molekulargewicht (MW(B)) im Bereich von 5000 bis 35000 g/mol auf, bevorzugt im Bereich von 10000 bis 30000 g/mol und insbesondere bevorzugt im Bereich von 15000 bis 25000 g/mol. Das gewichtsmittlere Molekulargewicht wird bestimmt mittels SEC-MALLS *(Size Exclusion Chromatography Multi-Angle Laser Light Scattering)* nach Chi-San Wu, *"Handbook of Size Exclusion Chromatography and the Related Techniques",* Seite 19.

Bevorzugt ist die Komponente (B) ein amorphes teilaromatisches Polyamid. Derartige amorphe teilaromatische Polyamide sind dem Fachmann bekannt und beispielsweise ausgewählt aus der Gruppe bestehend aus PA6I/6T, PA 6I und PA 6/3T.

Die Komponente (B) ist daher bevorzugt ausgewählt aus der Gruppe bestehend aus PA6I/6T, PA 6I, PA 6/3T.

Gegenstand der vorliegenden Erfindung ist daher auch ein Verfahren, bei dem die Komponente (B) ausgewählt ist aus der Gruppe bestehend aus PA 6I/6T, PA 6I und PA 6/3T.

Wenn als Komponente (B) Polyamid 6I/6T eingesetzt wird, kann dieses beliebige Anteile an 6I- und an 6T-Baueinheiten enthalten. Bevorzugt liegt das molare Verhältnis von 6I-Baueinheiten zu 6T-Baueinheiten im Bereich von 1 zu 1 bis 3 zu 1, besonders bevorzugt im Bereich von 1,5 zu 1 bis 2,5 zu 1 und insbesondere bevorzugt im Bereich von 1,8 zu 1 bis 2,3 zu 1.

Die MVR (275 °C / 5 kg) (Schmelze-Volumenfließrate; Melt Volume-flow Rate, MVR) der Komponente (B) liegt bevorzugt im Bereich von 50 ml/10 min bis 150 ml/10 min, besonders bevorzugt im Bereich von 95 ml/10 min bis 105 ml/10 min.

Die Nullviskosität $\eta_0$ (Zero shear rate viscosity) der Komponente (B) liegt beispielsweise im Bereich von 770 bis 3250 Pas. Die Nullviskosität $\eta_0$ (Zero shear rate viscosity) wird bestimmt mit einem Rotationsviskosimeter "DHR-1" der Firma TA Instruments und einer Platte-Platte-Geometrie mit einem Durchmesser von 25 mm und einem Spaltabstand von 1 mm. Es werden ungetemperte Proben der Komponente (B) für 7 Tage bei 80 °C unter Vakuum getrocknet und diese dann mit zeitabhängigem Frequenzsweep (Sequenztest) mit einem Kreisfrequenzbereich von 500 bis 0,5 rad/s gemessen. Es wurden folgende weitere Messparameter verwendet: Deformation: 1,0 %, Messtemperatur: 240 °C, Messzeit: 20 min, Vorheizzeit nach Probenpräparation: 1,5 min.

Die Komponente (B) weist eine Aminoendgruppenkonzentration (AEG) auf, die bevorzugt im Bereich von 30 bis 45 mmol/kg und insbesondere bevorzugt im Bereich von 35 bis 42 mmol/kg liegt.

Zur Bestimmung der Aminoendgruppenkonzentration (AEG) wird 1 g der Komponente (B) in 30 ml eines Phenol/Methanol-Gemischs (Volumenverhältnis Phenol : Methanol 75:25) gelöst und anschließend mit 0,2 N Salzsäure in Wasser potentiometrisch titriert.

Die Komponente (B) weist eine Carboxylendgruppenkonzentration (CEG) auf, die bevorzugt im Bereich von 60 bis 155 mmol/kg und insbesondere bevorzugt im Bereich von 80 bis 135 mmol/kg liegt.

Zur Bestimmung der Carboxylendgruppenkonzentration (CEG) wird 1 g der Komponente (B) in 30 ml Benzylalkohol aufgelöst. Anschließend wird bei 120 °C mit 0,05 N Kalilauge in Wasser visuell titriert.

Vorzugsweise enthält die Komponente (B) mindestens 3 Gew.-%, mehr bevorzugt mindestens 5 Gew.-%, besonders bevorzugt mindestens 8 Gew.-%, PA 6I/6T, bezogen auf das Gesamtgewicht der Komponente (B).

Weiterhin enthält die Komponente (B) vorzugsweise höchstens 40 Gew.-%, mehr bevorzugt höchstens 30 Gew.-%, besonders bevorzugt höchstens 25 Gew.-%, PA 6I/6T, bezogen auf das Gesamtgewicht der Komponente (B).

Gegenstand der vorliegenden Erfindung ist daher auch ein Verfahren, bei dem die Komponente (B) mindestens 3 Gew.-% PA 6I/6T enthält, bezogen auf das Gesamtgewicht der Komponente (B).

Komponente (C)

Erfindungsgemäß ist die Komponente (C) mindestens ein mehrwertiger Alkohol.

"Mindestens ein mehrwertiger Alkohol" bedeutet im Rahmen der vorliegenden Erfindung sowohl genau ein mehrwertiger Alkohol als auch eine Mischung aus zwei oder mehreren mehrwertigen Alkoholen.

"Mehrwertig" bedeutet im Rahmen der vorliegenden Erfindung, dass der Alkohol mindestens zwei Hydroxylgruppen im Molekül aufweist.

Der erfindungsgemäße mindestens eine mehrwertige Alkohol weist also mindestens zwei Hydroxylgruppen im Molekül auf.

Vorzugsweise weist der mindestens eine mehrwertige Alkohol ein zahlenmittleres Molekulargewicht ($M_n$) von weniger als 2000 g/mol auf. Das zahlenmittlere Molekulargewicht ($M_n$) wird bestimmt mittels SEC-MALLS (Size Exclusion Chromatography-Multi-Angle Laser Light Scattering) nach Chi-san Wu "Handbook of size exclusion chromatography and related techniques", Seite 19.

Gegenstand der vorliegenden Erfindung ist daher auch ein Verfahren, bei dem die Komponente (C) ein zahlenmittleres Molekulargewicht ($M_n$) von weniger als 2000 g/mol aufweist.

Der erfindungsgemäße mindestens eine mehrwertige Alkohol kann ausgewählt sein aus aliphatischen Verbindungen mit mehr als zwei Hydroxylgruppen, aliphatischcycloaliphatischen Verbindungen mit mehr als zwei Hydroxylgruppen, cycloaliphatischen Verbindungen mit mehr als zwei Hydroxylgruppen, aromatischen Verbindungen mit mehr als zwei Hydroxylgruppen und Sacchariden.

Enthält der mehrwertige Alkohol eine aliphatische Kette, kann diese Kette nicht nur Kohlenstoffatome enthalten, sondern auch ein oder mehrere Heteroatome, die beispielsweise aus Stickstoff-, Sauerstoff- und Schwefelatomen ausgewählt sein können.

Enthält der mehrwertige Alkohol einen cycloaliphatischen Ring, kann dieser Ring monocyclisch, Teil eines bicyclischen oder polycyclischen Ringsystems, carbocyclisch oder heterocyclisch sein.

Enthält der mehrwertige Alkohol einen heterocyclischen Ring, kann dieser Ring monocyclisch oder Teil eines bicyclischen oder polyzyklischen Ringsystems sein. Der heterocyclische Ring kann auch ein oder mehrere Heteroatome enthalten, die beispielsweise aus Stickstoff-, Sauerstoff- und Schwefelatomen ausgewählt sein können.

Der erfindungsgemäße mindestens eine mehrwertige Alkohol kann zusätzlich einen oder mehrere Substituenten enthalten, wie Ether-, Carbonsäure-, Carbonsäureamid- oder Carbonsäureestergruppen.

Beispielsweise ist die Komponente (C) ausgewählt aus der Gruppe bestehend aus Glycerin, Trimethylolpropan, 2,3-Di-(2'-Hydroxyethyl)-cyclohexan-1-ol, Hexan-1,2,6-triol, 1,1,1-Tris-(Hydroxymethyl)-ethan, 3-(2'-Hydroxyethoxy)-propan-1,2-diol, 3-(2'-Hydroxypropoxy)-propan-1,2-diol, 2-(2'-Hydroxyethoxy)-hexan-1,2-diol, 6-(2'-Hydroxypropoxy)-hexan-1,2-diol, 1,1,1-Tris-[(2'-Hydroxyethoxy)-methyl]-ethan, 1,1,1-Tris-[(2'-Hydroxypropoxy)-methyl]-propan, 1,1,1-Tris-(4'-Hydroxyphenyl)-ethan, 1,1,1-Tris-(Hydroxyphenyl)-propan, 1,1,3-Tris-(Dihydroxy-3-methylphenyl)-propan, 1,1,4-Tris-(Dihydroxyphenyl)-butan, 1,1,5-Tris-(Hydroxyphenyl)-3-methylpentan, Di-Trimethylolpropan, Trimethylolpropanethoxylate, Trimethylolpropanpropoxylate, Pentaerythritol, Di-Pentaerythritol, Tri-Pentaerythritol Cyclodextrine, D-Mannose, Glucose, Galactose, Sucrose, Fructose, Xylose, Arabinose, D-Manitol, D-Sorbitol, D-Arabitol, L-Arabitol, Xylitol, Idit, Talit, Allit, Altrit, Gulit, Erythritol, Threit und D-Gulonsäure-y-lacton.

Bevorzugt umfasst die Komponente (C) mehrwertige Alkohole mit mindestens zwei Hydroxylgruppen, wobei die Hydroxylgruppen an Kohlenstoffatome gebunden sind, die durch mindestens ein Atom voneinander getrennt sind. Besonders bevorzugt umfasst die Komponente (C) mehrwertige Alkohole mit mindestens zwei Hydroxylgruppen, wobei die Hydroxylgruppen an Kohlenstoffatome gebunden sind, die durch ein einzelnes Kohlenstoffatom voneinander getrennt sind.

Vorzugsweise ist die Komponente (C) ausgewählt aus der Gruppe bestehend aus Pentaerythritol Di-Pentaerythritol, Tri-Pentaerythritol, Di-Trimethylolpropan, D-Manitol, D-Sorbitol und Xylitol, am meisten bevorzugt aus der Gruppe bestehend aus Di-Pentaerythritol und/oder Tri-Pentaerythritol, insbesondere bevorzugt ist die Komponente (C) Di-Pentaerythritol.

Gegenstand der vorliegenden Erfindung ist daher auch ein Verfahren, bei dem die Komponente (C) ausgewählt ist aus der Gruppe bestehend aus Glycerin, Trimethylolpropan, 2,3-Di-(2'-Hydroxyethyl)-cyclohexan-1-ol, Hexan-1,2,6-triol, 1,1,1-Tris-(Hydroxymethyl)-ethan, 3-(2'-Hydroxyethoxy)-propan-1,2-diol, 3-(2'-Hydroxypropoxy)-propan-1,2-diol, 2-(2'-Hydroxyethoxy)-hexan-1,2-diol, 6-(2'-Hydroxypropoxy)-hexan-1,2-diol, 1,1,1-Tris-[(2'-Hydroxyethoxy)-methyl]-ethan, 1,1,1-Tris-[(2'-Hydroxypropoxy)-methyl]-propan, 1,1,1-Tris-(4'-Hydroxyphenyl)-ethan, 1,1,1-Tris-(Hydroxyphenyl)-propan, 1,1,3-Tris-(Dihydroxy-3-methylphenyl)-propan, 1,1,4-Tris-(Dihydroxyphenyl)-butan, 1,1,5-Tris-(Hydroxyphenyl)-3-methylpentan, Di-Trimethylolpropan, Trimethylolpropanethoxylate, Trimethylolpropanpropoxylate, Pentaerythritol, Di-Pentaerythritol, Tri-Pentaerythritol Cyclodextrine, D-Mannose, Glucose, Galactose, Sucrose, Fructose, Xylose, Arabinose, D-Manitol, D-Sorbitol, D-Arabitol, L-Arabitol, Xylitol, Idit, Talit, Allit, Altrit, Gulit, Erythritol, Threit und D-Gulonsäure-y-lacton.

## Komponente (D)

Die Komponente (D) ist mindestens ein Additiv.

"Mindestens ein Additiv" bedeutet im Rahmen der vorliegenden Erfindung sowohl genau ein Additiv als auch eine Mischung aus zwei oder mehreren Additiven.

Additive als solche sind dem Fachmann bekannt. Beispielsweise ist das mindestens eine Additiv ausgewählt aus der Gruppe bestehend aus Antinukleierungsmitteln, Stabilisatoren, leitfähigen Additiven, Endgruppenfunktionalisierern, Farbstoffen und Farbpigmenten.

Gegenstand der vorliegenden Erfindung ist daher auch ein Verfahren, bei dem die Komponente (D) ausgewählt ist aus der Gruppe bestehend aus Antinukleierungsmitteln, Stabilisatoren, leitfähigen Additiven, Endgruppenfunktionalisierern, Farbstoffen und Farbpigmenten.

Ein geeignetes Antinukleierungsmittel ist beispielsweise Lithiumchlorid. Geeignete Stabilisatoren sind beispielsweise Phenole, Phosphite und Kupferstabilisatoren. Geeignete leitfähige Additive sind Kohlenstofffasern, Metalle, Edelstahlfasern, Carbonnanotubes und Ruß. Geeignete Endgruppenfunktionalisierer sind beispielsweise Terephthalsäure, Adipinsäure und Propionsäure. Geeignete Farbstoffe und Farbpigmente sind beispielsweise Ruß und Eisenchromoxide.

Enthält das Sinterpulver die Komponente (D), so enthält es mindestens 0,2 Gew.-% der Komponente (D), bevorzugt mindestens 0,3 Gew.-% der Komponente (D), bezogen auf die Summe der Gewichtsprozente der Komponenten (A), (B), (C), (D), (E) und (F), bevorzugt bezogen auf das Gesamtgewicht des Sinterpulvers (SP).

## Komponente (E)

Erfindungsgemäß ist die Komponente (E) mindestens ein Verstärkungsmittel.

"Mindestens ein Verstärkungsmittel" bedeutet im Rahmen der vorliegenden Erfindung sowohl genau ein Verstärkungsmittel als auch eine Mischung aus zwei oder mehreren Verstärkungsmitteln.

Unter einem Verstärkungsmittel wird im Rahmen der vorliegenden Erfindung ein Material verstanden, das die mechanischen Eigenschaften von mit dem erfindungsgemäßen Verfahren hergestellten Formkörpern verbessert gegenüber Formkörpern, die das Verstärkungsmittel nicht enthalten.

Verstärkungsmittel als solche sind dem Fachmann bekannt. Die Komponente (E) kann beispielsweise kugelförmig, plättchenförmig oder faserförmig sein.

Bevorzugt ist das mindestens eine Verstärkungsmittel plättchenförmig oder faserförmig.

Unter einem "faserförmigen Verstärkungsmittel" wird ein Verstärkungsmittel verstanden, bei dem das Verhältnis von Länge des faserförmigen Verstärkungsmittels zum Durchmesser des faserförmigen Verstärkungsmittels im Bereich von 2 : 1 bis 40 : 1 liegt, bevorzugt im Bereich von 3 : 1 bis 30 : 1 und insbesondere bevorzugt im Bereich von 5 : 1 bis 20 : 1, wobei die Länge des faserförmigen Verstärkungsmittels und der Durchmesser des faserförmigen Verstärkungsmittels bestimmt werden durch Mikroskopie mittels Bildauswertung an Proben nach Veraschung, wobei mindestens 70 000 Teile des faserförmigen Verstärkungsmittels nach Veraschung ausgewertet werden.

Die Länge des faserförmigen Verstärkungsmittels liegt dann üblicherweise im Bereich von 5 bis 1000 $\mu$m, bevorzugt im Bereich von 10 bis 600 $\mu$m und insbesondere bevorzugt im Bereich von 20 bis 500 $\mu$m, bestimmt mittels Mikroskopie mit Bildauswertung nach Veraschung.

Der Durchmesser liegt dann beispielsweise im Bereich von 1 bis 30 $\mu$m, bevorzugt im Bereich von 2 bis 20 $\mu$m und insbesondere bevorzugt im Bereich von 5 bis 15 $\mu$m, bestimmt mittels Mikroskopie mit Bildauswertung nach Veraschung.

Das mindestens eine Verstärkungsmittel ist in einer weiteren bevorzugten Ausführungsform plättchenförmig. Unter "plättchenförmig" wird im Rahmen der vorliegenden Erfindung verstanden, dass die Partikel des mindestens einen Verstärkungsmittels eine Verhältnis von Durchmesser zu Dicke im Bereich von 4 : 1 bis 10 : 1 aufweisen, bestimmt mittels Mikroskopie mit Bildauswertung nach Veraschung.

Geeignete Verstärkungsmittel sind dem Fachmann bekannt und beispielsweise ausgewählt aus der Gruppe bestehend aus Carbonnanotubes, Kohlenstofffasern, Borfasern, Glasfasern, Glaskugeln, Kieselsäurefasern, Keramikfasern, Basaltfasern, Aluminiumsilikaten, Aramidfasern und Polyesterfasern.

Gegenstand der vorliegenden Erfindung ist daher auch ein Verfahren, bei dem die Komponente (E) ausgewählt ist aus der Gruppe bestehend aus Carbonnanotubes, Kohlenstofffasern, Borfasern, Glasfasern, Glaskugeln, Kieselsäurefasern, Keramikfasern, Basaltfasern, Aluminiumsilikaten, Aramidfasern und Polyesterfasern.

Bevorzugt ist das mindestens eine Verstärkungsmittel ausgewählt aus der Gruppe bestehend aus Aluminiumsilikaten, Glasfasern, Glaskugeln, Kieselsäurefasern und Kohlenstofffasern.

Besonders bevorzugt ist das mindestens eine Verstärkungsmittel ausgewählt aus der Gruppe bestehend aus Aluminiumsilikaten, Glasfasern, Glaskugeln und Kohlenstofffasern. Diese Verstärkungsmittel können zudem aminosilanfunktionalisiert sein.

Geeignete Kieselsäurefasern sind beispielsweise Wollastonit.

Geeignete Aluminiumsilikate sind dem Fachmann als solche bekannt. Als Aluminiumsilikate werden Verbindungen bezeichnet, die $Al_2O_3$ und $SiO_2$ enthalten. Strukturell ist den Aluminiumsilikaten gemeinsam, dass die Siliziumatome tetraedrisch von Sauerstoffatomen koordiniert sind und die Aluminiumatome oktaedrisch von Sauerstoffatomen koordiniert sind. Aluminiumsilikate können darüber hinaus weitere Elemente enthalten.

Bevorzugt als Aluminiumsilikate sind Schichtsilikate. Besonders bevorzugt als Aluminiumsilikate sind kalzinierte Aluminiumsilikate, insbesondere bevorzugt sind kalzinierte Schichtsilikate. Das Aluminiumsilikat kann zudem aminosilanfunktionalisiert sein.

Ist das mindestens eine Verstärkungsmittel ein Aluminiumsilikat, kann das Aluminiumsilikat in beliebiger Form eingesetzt werden. Beispielsweise kann es als reines Aluminiumsilikat eingesetzt werden, ebenso ist es möglich, dass das Aluminiumsilikat als Mineral eingesetzt wird. Bevorzugt wird das Aluminiumsilikat als Mineral eingesetzt. Geeignete Aluminiumsilikate sind beispielsweise Feldspate, Zeolite, Sodalith, Sillimanit, Andalusit und Kaolin. Kaolin ist als Aluminiumsilikat bevorzugt.

Kaolin gehört zu den Tongesteinen und enthält im Wesentlichen das Mineral Kaolinit. Die Summenformel von Kaolinit ist $Al_2[(OH)_4/Si_2O_5]$. Kaolinit ist ein Schichtsilikat. Kaolin enthält neben Kaolinit üblicherweise noch weitere Verbindungen wie beispielsweise Titandioxid, Natriumoxide und Eisenoxide. Erfindungsgemäß bevorzugtes Kaolin enthält mindestens 98 Gew.-% Kaolinit, bezogen auf das Gesamtgewicht des Kaolins.

Enthält das Sinterpulver die Komponente (E), so enthält es mindestens 10 Gew.-% der Komponente (E), bezogen auf die Summe der Gewichtsprozente der Komponenten (A), (B), (C), (D), (E) und (F), bevorzugt bezogen auf das Gesamtgewicht des Sinterpulvers (SP).

Komponente (F)

Erfindungsgemäß ist die Komponente (F) mindestens ein mineralisches Flammschutzmittel.

"Mindestens ein mineralisches Flammschutzmittel" bedeutet im Rahmen der vorliegenden Erfindung sowohl genau ein mineralisches Flammschutzmittel als auch eine Mischung aus zwei oder mehreren mineralischen Flammschutzmitteln.

Unter einem mineralischen Flammschutzmittel wird im Rahmen der vorliegenden Erfindung eine Verbindung verstanden, die die Ausbreitung von Bränden einschränkt, verlangsamt oder verhindert und welche zudem auf Basis von Mineralen ist.

Es versteht sich von selbst, dass die Komponente (F) von dem gegebenenfalls in dem Sinterpulver (SP) enthaltenen mindestens einen Verstärkungsmittel verschieden ist. Ebenso ist die Komponente (F) von dem gegebenenfalls in dem Sinterpulver (SP) enthaltenen mindestens einen Additiv verschieden.

Es ist darüber hinaus bevorzugt, dass das Sinterpulver (SP) kein mineralisches Flammschutzmittel, außer der Komponente (F), enthält. Insbesondere bevorzugt enthält das Sinterpulver (SP) kein Flammschutzmittel außer der Komponente (F). Bevorzugt ist das mindestens eine mineralische Flammschutzmittel auf Basis von Aluminium und/oder Magnesium.

Gegenstand der vorliegenden Erfindung ist daher auch ein Verfahren, bei dem die Komponente (F) auf Basis von Magnesium und/oder Aluminium ist.

Bevorzugt sind Flammschutzmittel, die bei erhöhten Temperaturen Wasser abspalten. Daher sind als mineralische Flammschutzmittel bevorzugt Aluminiumhydroxid und/oder Magnesiumhydroxid und/oder Aluminiumoxidhydroxid. Magnesiumhydroxid ist besonders bevorzugt als das mindestens eine mineralische Flammschutzmittel.

Das mindestens eine mineralische Flammschutzmittel kann beispielsweise auch als Mineral eingesetzt werden. Ein geeignetes Mineral ist beispielsweise Böhmit. Böhmit hat die chemische Zusammensetzung $AlO(OH)$ bzw. $\gamma$-ALOOH (Aluminiumoxidhydroxid).

Aluminiumhydroxid wird auch als ATH oder Aluminiumtrihydroxid bezeichnet. Magnesiumhydroxid wird auch als MDH oder Magnesiumdihydroxid bezeichnet.

Die Komponente (F) weist beispielsweise einen D10-Wert im Bereich von 0,3 bis 1,2 $\mu$m, einen D50-Wert im Bereich von 1,2 bis 2 $\mu$m und einen D90-Wert im Bereich von 2 bis 5 $\mu$m auf.

Bevorzugt weist die Komponente (F) einen D10-Wert im Bereich von 0,5 bis 1 $\mu$m, einen D50-Wert im Bereich von 1,3 bis 1,8 $\mu$m und einen D90-Wert im Bereich von 2 bis 4 $\mu$m auf.

Die Bestimmung des D10-, D50- und D90-Wertes erfolgt wie vorstehend für den D10-, D50- und D90-Wert des Sinterpulvers (SP) beschrieben.

Die Komponente (F) kann zudem oberflächenmodifiziert sein. Beispielsweise ist die Komponente (F) aminosilanmodifiziert.

Enthält das Sinterpulver die Komponente (F), so enthält es mindestens 10 Gew.-% der Komponente (F), bezogen auf die Summe der Gewichtsprozente der Komponenten (A), (B), (C), (D), (E) und (F), bevorzugt bezogen auf das Gesamtgewicht des Sinterpulvers (SP).

<u>Schritt ii)</u>

In Schritt ii) wird die in Schritt i) bereitgestellte Schicht des Sinterpulvers (SP) belichtet.

Beim Belichten schmilzt zumindest ein Teil der Schicht des Sinterpulvers (SP) auf. Das aufgeschmolzene Sinterpulver (SP) fließt ineinander und bildet eine homogene Schmelze. Nach dem Belichten kühlt der aufgeschmolzene Teil der Schicht des Sinterpulvers (SP) wieder ab und die homogene Schmelze erstarrt wieder.

Zur Belichtung eignen sich alle dem Fachmann bekannten Methoden. Bevorzugt erfolgt das Belichten in Schritt ii) mit einer Strahlungsquelle. Die Strahlungsquelle ist bevorzugt ausgewählt aus der Gruppe bestehend aus Infrarotstrahlern und Lasern. Als Infrarotstrahler sind Nahinfrarot-Strahler insbesondere bevorzugt.

Gegenstand der vorliegenden Erfindung ist daher auch ein Verfahren, bei dem das Belichten in Schritt ii) mit einer Strahlungsquelle erfolgt, die ausgewählt ist aus der Gruppe bestehend aus Lasern und Infrarotstrahlern.

Geeignete Laser sind dem Fachmann bekannt und beispielsweise Faserlaser, Nd:YAG Laser (Neodym-dotierter Yttrium-Aluminium-Granat-Laser) oder Kohlendioxidlaser.

Wird als Strahlungsquelle beim Belichten in Schritt ii) ein Laser eingesetzt, so wird üblicherweise die in Schritt i) bereitgestellte Schicht des Sinterpulvers (SP) mit dem Laserstrahl lokal und kurzzeitig belichtet. Dabei werden nur die Teile des Sinterpulvers (SP), die vom Laserstrahl belichtet worden sind, selektiv aufgeschmolzen. Wird in Schritt ii) ein Laser eingesetzt, wird das erfindungsgemäße Verfahren auch als selektives Lasersintern bezeichnet. Das selektive Lasersintern ist dem Fachmann als solches bekannt.

Wird als Strahlungsquelle beim Belichten in Schritt ii) ein Infrarot-Strahler, insbesondere ein Nahinfrarot-Strahler eingesetzt, so liegt die Wellenlänge, mit der die Strahlungsquelle strahlt, üblicherweise im Bereich von 780 nm bis 1000 $\mu$m, bevorzugt im Bereich von 780 nm bis 50 $\mu$m und insbesondere im Bereich von 780 nm bis 2,5 $\mu$m.

Beim Belichten in Schritt ii) wird dann üblicherweise die gesamte Schicht des Sinterpulvers (SP) belichtet. Damit beim Belichten nur die gewünschten Bereiche des Sinterpulvers (SP) aufschmelzen, wird üblicherweise eine Infrarot-absorbierende Tinte (IR-absorbierende Tinte) auf die Bereiche aufgebracht, die aufschmelzen sollen.

Das Verfahren zur Herstellung des Formkörpers umfasst dann bevorzugt zwischen Schritt i) und Schritt ii) einen Schritt i-1), Aufbringen mindestens einer IR-absorbierenden Tinte, auf zumindest einen Teil der in Schritt i) bereitgestellten Schicht des Sinterpulvers (SP).

Ein weiterer Gegenstand der vorliegenden Erfindung ist daher auch ein Verfahren zur Herstellung eines Formkörpers, umfassend die Schritte

    i) Bereitstellen einer Schicht eines Sinterpulvers (SP), das die Komponenten

(A) mindestens ein teilkristallines Polyamid,
(B) mindestens ein amorphes Polyamid,
(C) mindestens einen mehrwertigen Alkohol,
(D) gegebenenfalls mindestens ein Additiv,
(E) gegebenenfalls mindestens ein Verstärkungsmittel und
(F) gegebenenfalls mindestens ein mineralisches Flammschutzmittel

enthält,

i-1) Aufbringen mindestens einer IR-absorbierenden Tinte auf zumindest einen Teil der in Schritt i) bereitgestellten Schicht des Sinterpulvers (SP)

ii) Belichten der in Schritt i) bereitgestellten Schicht des Sinterpulvers (SP).

Als IR-absorbierende Tinten eignen sich alle dem Fachmann bekannten IR-absorbierenden Tinten, insbesondere dem Fachmann bekannte IR-absorbierende Tinte für das High Speed Sintern.
IR-absorbierende Tinten enthalten üblicherweise zumindest einen Absorber, der IR-Strahlung, bevorzugt NIR-Strahlung (Nahinfrarot Strahlung) absorbiert. Beim Belichten der Schicht des Sinterpulvers (SP) in Schritt ii) wird durch die Absorption der IR-Strahlung, bevorzugt der NIR-Strahlung, durch den in der IR-absorbierenden Tinten enthaltenen IR-Absorber der Teil der Schicht des Sinterpulvers (SP), auf den die IR-absorbierende Tinte aufgebracht worden ist, selektiv erwärmt.
Die IR-absorbierende Tinte kann neben dem zumindest einen Absorber eine Trägerflüssigkeit enthalten. Geeignete Trägerflüssigkeiten sind dem Fachmann bekannt und beispielsweise Öle oder Lösungsmittel.
Der zumindest eine Absorber eine Absorber kann in der Trägerflüssigkeit gelöst oder dispergiert vorliegen.
Erfolgt die Belichtung in Schritt ii) mit einer Strahlungsquelle, die ausgewählt ist aus Infrarot-Strahlern und wird Schritt i-1) durchgeführt, dann wird das erfindungsgemäße Verfahren auch als *High-Speed Sintering (HSS)* oder *Multijet-Fusion-Verfahren (MJF)* bezeichnet. Diese Verfahren sind dem Fachmann als solche bekannt.
Im Anschluss an den Schritt ii) wird die Schicht des Sinterpulvers (SP) üblicherweise um die Schichtdicke der in Schritt i) bereitgestellten Schicht des Sinterpulvers (SP) abgesenkt und eine weitere Schicht des Sinterpulvers (SP) aufgebracht. Diese wird anschließend gemäß Schritt ii) erneut belichtet.
Dadurch verbindet sich zum Einen die obere Schicht des Sinterpulvers (SP) mit der unteren Schicht des Sinterpulvers (SP), außerdem verbinden sich die Partikel des Sinterpulvers (SP) innerhalb der oberen Schicht durch Aufschmelzen miteinander.
Im erfindungsgemäßen Verfahren können die Schritte i) und ii) sowie gegebenenfalls i1) also wiederholt werden.
Indem das Absenken des Pulverbetts, das Aufbringen des Sinterpulvers (SP) und das Belichten und damit das Aufschmelzen des Sinterpulvers (SP) wiederholt werden, werden dreidimensionale Formkörper hergestellt. Es ist möglich, Formkörper herzustellen, die beispielsweise auch Hohlräume aufweisen. Ein zusätzliches Stützmaterial ist nicht notwendig, da das nicht aufgeschmolzene Sinterpulver (SP) selbst als Stützmaterial fungiert.
Ein weiterer Gegenstand der vorliegenden Erfindung ist daher auch ein Formkörper erhältlich nach dem erfindungsgemäßen Verfahren.
Bei dem erfindungsgemäßen Verfahren von besonderer Bedeutung ist der Schmelzbereich des Sinterpulvers (SP), das sogenannte Sinterfenster (WSP) des Sinterpulvers (SP).
Das Sinterfenster (WSP) des Sinterpulvers (SP) kann beispielsweise durch dynamische Differenzkalorimetrie (DDK; Differential Scanning Calorimetry, DSC) bestimmt werden.
Bei der dynamischen Differenzkalorimetrie werden die Temperatur einer Probe, im vorliegenden Fall also einer Probe des Sinterpulvers (SP), und die Temperatur einer Referenz linear mit der Zeit geändert. Dazu wird der Probe und der Referenz Wärme zugeführt bzw. aus diesen abgeführt. Es wird die Wärmemenge Q bestimmt, die notwendig ist, um die Probe auf der gleichen Temperatur wie die Referenz zu halten. Als Referenzwert dient die der Referenz zugeführte bzw. abgeführte Wärmemenge QR.
Geht die Probe eine endotherme Phasenumwandlung ein, so muss eine zusätzliche Wärmemenge Q zugeführt werden, um die Probe auf der gleichen Temperatur wie die Referenz zu halten. Findet eine exotherme Phasenumwandlung statt, so muss eine Wärmemenge Q abgeführt werden, um die Probe auf der gleichen Temperatur wie die Referenz zu halten. Die Messung liefert ein DSC-Diagramm, in dem die Wärmemenge Q, die der Probe zugeführt bzw. aus dieser abgeführt wird, in Abhängigkeit von der Temperatur T aufgetragen wird.
Üblicherweise wird bei der Messung zunächst ein Heizlauf (H) durchgeführt, das heißt, die Probe und die Referenz werden linear erwärmt. Während des Schmelzens der Probe (Phasenumwandlung fest/flüssig), muss eine zusätzliche Wärmemenge Q zugeführt werden, um die Probe auf der gleichen Temperatur wie die Referenz zu halten. Im DSC-Diagramm wird dann ein Peak beobachtet, der sogenannte Aufschmelzpeak.

Im Anschluss an den Heizlauf (H) wird üblicherweise ein Kühllauf (K) gemessen. Dabei werden die Probe und die Referenz linear abgekühlt, es wird also Wärme aus der Probe und der Referenz abgeführt. Während der Kristallisation bzw. Erstarrung der Probe (Phasenumwandlung flüssig/fest) muss eine größere Wärmemenge Q abgeführt werden, um die Probe auf der gleichen Temperatur wie die Referenz zu halten, da bei der Kristallisation bzw. dem Erstarren Wärme frei wird. In dem DSC Diagramm des Kühllaufs (K) wird dann ein Peak, der sogenannte Kristallisationspeak, in entgegengesetzter Richtung zu dem Aufschmelzpeak beobachtet.

Im Rahmen der vorliegenden Erfindung erfolgt das Erwärmen während des Heizlaufs üblicherweise mit einer Heizrate von 20 K/min. Das Abkühlen während des Kühllaufs erfolgt im Rahmen der vorliegenden Erfindung üblicherweise mit einer Kühlrate von 20 K/min.

Ein DSC-Diagramm mit einem Heizlauf (H) und einem Kühllauf (K) ist exemplarisch in Figur 1 dargestellt. Anhand des DSC-Diagramms können die Onset Temperatur des Aufschmelzens ($T_M^{onset}$) und die Onset-Temperatur der Kristallisation ($T_C^{onset}$) bestimmt werden.

Zur Bestimmung der Onset-Temperatur des Aufschmelzens ($T_M^{onset}$) wird eine Tangente an die Basislinie des Heizlaufs (H), die bei den Temperaturen unterhalb des Aufschmelzpeaks verläuft, angelegt. Eine zweite Tangente wird an den ersten Wendepunkt des Aufschmelzpeaks angelegt, der bei Temperaturen unterhalb der Temperatur am Maximum des Aufschmelzpeaks liegt. Die beiden Tangenten werden so weit extrapoliert, dass sie sich schneiden. Die senkrechte Extrapolation des Schnittpunkts auf die Temperaturachse gibt die Onset-Temperatur des Aufschmelzens ($T_M^{onset}$) an.

Zur Bestimmung der Onset-Temperatur der Kristallisation ($T_C^{onset}$) wird eine Tangente an die Basislinie des Kühllaufs (K), die bei den Temperaturen oberhalb des Kristallisationspeaks verläuft, angelegt. Eine zweite Tangente wird an den Wendepunkt des Kristallisationspeaks angelegt, der bei Temperaturen oberhalb der Temperatur am Minimum des Kristallisationspeaks liegt. Die beiden Tangenten werden so weit extrapoliert, dass sie sich schneiden. Die senkrechte Extrapolation des Schnittpunkts auf die Temperaturachse gibt die Onset-Temperatur der Kristallisation ($T_C^{onset}$) an.

Das Sinterfenster (W) ergibt sich aus der Differenz zwischen der Onset-Temperatur des Aufschmelzens ($T_M^{onset}$) und der Onset-Temperatur der Kristallisation ($T_C^{onset}$). Es gilt also:

$$W = T_M^{onset} - T_C^{onset} \; .$$

Im Rahmen der vorliegenden Erfindung haben die Begriffe "Sinterfenster (WSP)", "Größe des Sinterfensters (WSP)" und "Differenz zwischen der Onset-Temperatur des Aufschmelzens ($T_M^{onset}$) und der Onset-Temperatur der Kristallisation ($T_C^{onset}$)" die gleiche Bedeutung und werden synonym gebraucht.

Das erfindungsgemäße Sinterpulver (SP) eignet sich besonders gut zur Verwendung in einem Sinterverfahren.

Gegenstand der vorliegenden Erfindung ist daher auch die Verwendung eines Sinterpulvers (SP), das die Komponenten

    (A) mindestens ein teilkristallines Polyamid,
    (B) mindestens ein amorphes Polyamid,
    (C) mindestens einen mehrwertigen Alkohol,
    (D) gegebenenfalls mindestens ein Additiv,
    (E) gegebenenfalls mindestens ein Verstärkungsmittel und
    (F) gegebenenfalls mindestens ein mineralisches Flammschutzmittel

enthält, in einem Sinterverfahren.

Formkörper

Durch das erfindungsgemäße Verfahren wird ein Formkörper erhalten. Der Formkörper kann direkt nach dem Erstarren des beim Belichten in Schritt ii) aufgeschmolzenen Sinterpulvers (SP) aus dem Pulverbett entnommen werden. Ebenso ist es möglich, den Formkörper erst abzukühlen und dann erst aus dem Pulverbett zu entnehmen. Gegebenenfalls anhaftende Partikel des Sinterpulvers, die nicht aufgeschmolzen worden sind, können mechanisch nach bekannten Verfahren von der Oberfläche entfernt werden. Verfahren zur Oberflächenbehandlung des Formkörpers umfassen beispielsweise das Gleitschleifen oder Gleitspanen sowie Sandstrahlen, Glaskugelstrahlen oder Mikrostrahlen.

Es ist außerdem möglich, die erhaltenen Formkörper weiterzuverarbeiten oder beispielsweise die Oberfläche zu behandeln.

Ein weiterer Gegenstand der vorliegenden Erfindung ist daher ein Formkörper, erhältlich nach dem erfindungsgemäßen Verfahren.

Die erhaltenen Formkörper enthalten üblicherweise im Bereich von 35 bis 96,95 Gew.-% der Komponente (A), im Bereich von 3 bis 45 Gew.-% der Komponente (B), im Bereich von 0,05 bis 20 Gew.-% der Komponente (C), im Bereich von 0 bis 10 Gew.-% der Komponente (D), im Bereich von 0 bis 44,95 Gew.-% der Komponente (E) und im Bereich von 0 bis 60 Gew.-% der Komponente (F), jeweils bezogen auf das Gesamtgewicht des Formkörpers.

Bevorzugt enthält der Formkörper im Bereich von 45 bis 91,6 Gew.-% der Komponente (A), im Bereich von 8 bis 40 Gew.-% der Komponente (B), im Bereich von 0,1 bis 12,5 Gew.-% der Komponente (C), im Bereich von 0,3 bis 2,5 Gew.-% der Komponente (D), im Bereich von 0 bis 40 Gew.-% der Komponente (E) und im Bereich von 0 bis 50 Gew.-% der Komponente (F), jeweils bezogen auf das Gesamtgewicht des Formkörpers.

Am meisten bevorzugt enthält der Formkörper im Bereich von 53 bis 89,6 Gew.-% der Komponente (A), im Bereich von 10 bis 35 Gew.-% der Komponente (B), im Bereich von 0,1 bis 10 Gew.-% der Komponente (C), im Bereich von 0,3 bis 2 Gew.-% der Komponente (D), im Bereich von 0 bis 40 Gew.-% der Komponente (E) und im Bereich von 0 bis 40 Gew.-% der Komponente (F), jeweils bezogen auf das Gesamtgewicht des Formkörpers.

Erfindungsgemäß handelt es sich bei der Komponente (A) um die Komponente (A), die im Sinterpulver (SP) enthalten war. Ebenso handelt es sich bei der Komponente (B) um die Komponente (B), die im Sinterpulver (SP) enthalten war, bei der Komponente (C) um die Komponente (C), die im Sinterpulver (SP) enthalten war, bei der Komponente (D) um die Komponente (D), die im Sinterpulver (SP) enthalten war, bei der Komponente (E) um die Komponente (E), die im Sinterpulver (SP) enthalten war und bei der Komponente (F) um die Komponente (F), die im Sinterpulver (SP) enthalten war.

Wenn Schritt i-1) durchgeführt worden ist, enthält der Formkörper zudem üblicherweise die IR-absorbierende Tinte.

Dem Fachmann ist klar, dass durch die Belichtung des Sinterpulvers (SP) die Komponenten (A), (B) und (C) sowie gegebenenfalls (D), (E) und (F) chemische Reaktionen eingehen können und sich dadurch verändern können. Derartige Reaktionen sind dem Fachmann bekannt.

Bevorzugt gehen die Komponenten (A), (B) und (C) sowie gegebenenfalls (D), (E) und (F) beim Belichten in Schritt ii) keine chemische Reaktion ein, sondern das Sinterpulver (SP) schmilzt lediglich auf.

Nachfolgend wird die Erfindung anhand von Beispielen näher erläutert, ohne sie hierauf zu beschränken.

Beispiele

Es werden die folgenden Komponenten eingesetzt:

- teilkristallines Polyamid (Komponente (A)):

    (P1) Polyamid 6 (Ultramid® B27E, BASF SE)

- amorphes Polyamid (Komponente (B)):

    (AP1) Polyamid 6I/6T (Grivory G16, EMS) mit einem molaren Verhältnis von 6I:6T von 1,9:1

- mehrwertiger Alkohol (Komponente (C)):

    (C1) Di-Pentaerythritol (Charmor DP15, Perstorp)

- Additiv (Komponente (D)):

    (A1) phenolisches Antioxidans (Irganox 1098 (N,N'-hexane-1,6-diylbis(3-(3,5-di-tert-butyl-4-hydroxyphenylpropionamid))), BASF SE)

In Tabelle 1 sind die wesentlichen Parameter der eingesetzten teilkristallinen Polyamide (Komponente (A)) angegeben, in Tabelle 2 die wesentlichen Parameter der eingesetzten amorphen Polyamide (Komponente (B)).

Tabelle 1

|  | Typ | AEG [mmol/kg] | CEG [mmol/kg] | $T_M$ [°C] | $T_G$ [°C] | Nullscherviskosität $\eta_0$ bei 240°C [Pas] |
|---|---|---|---|---|---|---|
| P1 | PA 6 | 36 | 54 | 220,0 | 53 | 399 |

Tabelle 2

| | Typ | AEG [mmol/kg] | CEG [mmol/kg] | $T_G$ [°C] | Nullscherviskosität $\eta_0$ bei 240°C [Pas] |
|---|---|---|---|---|---|
| **AP1** | PA 6I6T | 37 | 86 | 125 | 770 |

AEG gibt die Aminoendgruppenkonzentration an. Diese wird bestimmt mittels Titration. Zur Bestimmung der Aminoendgruppenkonzentration (AEG) wird 1 g der Komponente (teilkristallines Polyamid oder amorphes Polyamid) in 30 ml eines Phenol/Methanol-Gemischs (Volumenverhältnis Phenol zu Methanol 75:25) gelöst und anschließend mit 0,2 N Salzsäure in Wasser visuell titriert.

CEG gibt die Carboxylendgruppenkonzentration an. Diese wird bestimmt mittels Titration. Zur Bestimmung der Carboxylendgruppenkonzentration (CEG) wird 1 g der Komponente (teilkristallines Polyamid oder amorphes Polyamid) in 30 ml Benzylalkohol aufgelöst und anschließend bei 120 °C mit 0,05 N Kalilauge in Wasser visuell titriert.

Die Schmelztemperatur ($T_M$) der teilkristallinen Polyamide sowie sämtliche Glasübergangstemperaturen ($T_G$) wurden jeweils mittels dynamischer Differenzkalorimetrie bestimmt.

Zur Bestimmung der Schmelztemperatur ($T_M$) wurde, wie vorstehend beschrieben, ein erster Heizlauf (H1) mit einer Heizrate von 20 K/min gemessen. Die Schmelztemperatur ($T_M$) entsprach dann der Temperatur am Maximum des Aufschmelzpeaks des ersten Heizlaufs (H1).

Zur Bestimmung der Glasübergangstemperatur ($T_G$) wurden im Anschluss an den ersten Heizlauf (H1) ein Kühllauf (K) und daran anschließend ein zweiter Heizlauf (H2) gemessen. Der Kühllauf wurde mit einer Kühlrate von 20 K/min gemessen. Der erste Heizlauf (H1) und der zweite Heizlauf (H2) wurden mit einer Heizrate von 20 K/min gemessen. Die Glasübergangstemperatur ($T_G$) wurde dann auf halber Höhe der Stufe des zweiten Heizlaufs (H2) bestimmt.

Die Nullscherviskosität $\eta_0$ (Zero shear rate viscosity) wurde bestimmt mit einem Rotationsviskosimeter "DHR-1" der Firma TA Instruments und einer Platte-Platte-Geometrie mit einem Durchmesser von 25 mm und einem Spaltabstand von 1 mm. Es wurden ungetemperte Proben für 7 Tage bei 80 °C unter Vakuum getrocknet und diese dann mit zeitabhängigem Frequenzsweep mit einem Kreisfrequenzbereich von 500 bis 0,5 rad/s gemessen. Es wurden folgende weitere Messparameter verwendet: Deformation: 1,0 %, Messtemperatur: 240 °C, Messzeit: 20 min, Vorheizzeit nach Probenpräparation: 1,5 min.

Herstellung von Sinterpulvern in einem Zweischneckenextruder

Zur Herstellung von Sinterpulvern wurden die in Tabelle 3 angegebenen Komponenten in dem in Tabelle 3 angegebenen Verhältnis in einem Zweischneckenextruder (ZE25) mit einer Drehzahl von 230 U/min (Umdrehungen pro Minute) bei 270 °C mit einem Durchsatz von 20 kg/h compoundiert, stranggranuliert und anschließend mit einer, mit flüssigem Stickstoff gekühlten, Stiftmühle zu Pulvern verarbeitet. Anschließend werden die Pulver gesichtet (die Partikelgröße eingestellt) und getrocknet (Partikelgrößenverteilung 20 bis 120 $\mu$m).

Tabelle 3

| Beispiel | (P1) [Gew.-%] | (AP1) | (A1) | (C1) |
|---|---|---|---|---|
| **V1** | 78,6 | 21 | 0,4 | |
| **B2** | 77,6 | 21 | 0,4 | 1 |

Für die Pulver wurde die Schmelztemperatur ($T_M$), wie vorstehend beschrieben, bestimmt.

Die Kristallisationstemperatur ($T_C$) wurde mittels dynamischer Differenzkalorimetrie (DDK; differential scanning calorimetry, DSC) bestimmt. Dazu wurden zunächst ein Heizlauf (H) mit einer Heizrate von 20 K/min und anschließend ein Kühllauf (K) mit einer Kühlrate von 20 K/min gemessen. Die Kristallisationstemperatur ($T_C$) ist die Temperatur am Extremum des Kristallisationspeaks.

Der Betrag der komplexen Viskosität in Scherung (complex shear viscosity) wurde bestimmt mittels Platte-Platte Rotationsrheometer bei einer Kreisfrequenz von 0,5 rad/s und einer Temperatur von 240 °C. Es wurde ein Rotationsviskosimeter "DHR-1" der Firma TA Instruments verwendet, wobei der Durchmesser 25 mm und der Spaltabstand 1 mm betrug. Es wurden ungetemperte Proben für 7 Tage bei 80 °C unter Vakuum getrocknet und diese dann mit zeitabhängigem Frequenzsweep (Sequenztest) mit einem Kreisfrequenzbereich von 500 bis 0,5 rad/s gemessen. Es wurden folgende weitere Messparameter verwendet: Deformation: 1,0 %, Messzeit: 20 min, Vorheizzeit nach Probenpräparation: 1,5 min.

Das Sinterfenster (W) wurde wie vorstehend beschrieben als Differenz aus der Onset-Temperatur des Aufschmelzens ($T_M^{onset}$) und der Onset-Temperatur der Kristallisation ($T_C^{onset}$) bestimmt.

Zur Bestimmung der thermooxidativen Stabilität der Sinterpulver wurde die komplexe Scherviskosität von frisch hergestellten Sinterpulvern sowie von Sinterpulvern nach Ofenlagerung bei 0,5 % Sauerstoff für 16 Stunden und 195 °C bestimmt. Es wurde das Verhältnis der Viskosität nach Lagerung (nach Alterung) zur Viskosität vor Lagerung (vor Alterung) bestimmt. Die Viskositätsmessung erfolgt mittels Rotationsrheologie bei einer Messfrequenz von 0,5 rad/s bei einer Temperatur von 240 °C.

Die Ergebnisse sind in Tabelle 4 zu sehen.

Tabelle 4

| Beispiel | Betrag der komplexen Viskosität bei 0,5 rad/s, 240 °C [Pas] | Verhältnis Viskosität nach Alterung zu vor Alterung | $T_M$ [°C] | $T_C$ [°C] | Sinterfenster W [K] | Sinterfenster W nach Alterung [K] |
|---|---|---|---|---|---|---|
| V1 | 620 | 3,5 | 218,2 | 172,5 | 28,3 | 27,1 |
| B2 | 415 | 1,3 | 217,2 | 180,6 | 21,1 | 21,6 |
| *n.b.: nicht bestimmt | | | | | | |

Es ist zu erkennen, dass das erfindungsgemäße Sinterpulver (SP) aus Beispiel B2, das die Komponente (C) enthält, nach Alterung eine deutlich weniger erhöhte Viskosität und somit eine bessere Rezyklierbarkeit zeigt als das Sinterpulver aus dem Vergleichsbeispiel V1.

Darüber hinaus ist zu erkennen, dass das erfindungsgemäße Sinterpulver ein, für das selektive Lasersintern, ausreichend breites Sinterfenster, auch nach Alterung, aufweist.

Darüber hinaus werden für die erhaltenen Sinterpulver die Schüttdichte nach DIN EN ISO 60 und die Stampfdichte nach DIN EN ISO 787-11 bestimmt, sowie der Hausner-Faktor als Verhältnis aus Stampfdichte zu Schüttdichte.

Die Partikelgrößenverteilung, angegeben als D10-, D50- und D90-Wert, wurden wie vorstehend beschrieben, mit einem Malvern Mastersizer bestimmt.

Der Lawinenwinkel wurde mittels Revolution Powder Analyzer (RPA) mit einer Umdrehungszahl von 0,6 U/min und 15 Bildern pro Sekunde bestimmt. Es wurde aus 128 Lawinenereignissen gemittelt.

Die Ergebnisse sind in Tabelle 5 zu sehen.

Tabelle 5

| Beispiele | Schüttdichte [kg/m³] | Stampfdichte [kg/m³] | Hausner Faktor | D10 [μm] | D50 [μm] | D90 [μm] | Lawinenwinkel [°] |
|---|---|---|---|---|---|---|---|
| V1 | 460 | 570 | 1,24 | 38,76 | 65,24 | 107,31 | 52,7 |
| B2 | 440 | 568 | 1,29 | 41,6 | 67,7 | 109,2 | n.b.* |
| n.b.*: nicht bestimmt | | | | | | | |

Lasersinterversuche

Die Sinterpulver (SP) wurden mit einer Schichtdicke von 0,1 mm in den Bauraum mit der in Tabelle 6 angegebenen Temperatur eingebracht. Anschließend wurden die Sinterpulver mit einem Laser, mit der in Tabelle 6 angegebenen Laserleistung und dem angegebenen Scanabstand, belichtet, wobei die Geschwindigkeit des Lasers über die Probe beim Belichten bei 15 m/sec lag. Der Scanabstand wird auch als Laserabstand oder als Spurabstand bezeichnet. Beim selektiven Lasersintern erfolgt das Scannen üblicherweise in Streifen. Der Scanabstand gibt den Abstand zwischen den Mitten der Streifen, also zwischen den beiden Zentren des Laserstrahls zweier Streifen, an. Die Lasersinterversuche erfolgten auf Farsoon HT251.

Tabelle 6

| Beispiel | Temperatur Pulverbett [°C] | Temperatur Zylinder [°C] | Laserleistung [W] | Lasergeschwindigkeit [m/s] | Punktabstand [mm] |
|---|---|---|---|---|---|
| V1 | 201 | 190 | 25 | 5 | 0,2 |
| B2 | 206 | 180 | 55 | 15 | 0,18 |

Anschließend wurden die Eigenschaften der erhaltenen Zugstäbe (Sinterstäbe) bestimmt. Die Prüfung der erhaltenen Zugstäbe (Sinterstäbe) erfolgte im trockenen Zustand nach Trocknung bei 80 °C für 336 Stunden im Vakuum. Die Ergebnisse sind in Tabelle 7 gezeigt. Ferner wurden Charpy-Stäbe hergestellt, die ebenfalls trocken geprüft wurden (nach ISO 179-2/1eA (F): 1997+Amd. 1 : 2011 und ISO 179-2/1eU: 1997+Amd. 1 : 2011).

Die Zugfestigkeit, das Zug-E-Modul und die Bruchdehnung wurden gemäß ISO 527-2 : 2012 bestimmt.

Die Wärmeformbeständigkeitstemperatur (heat deflection temperature, HDT) wurde gemäß ISO 75-2 : 2013 ermittelt, wobei sowohl Methode A mit einer Randfaserspannung von 1,8 N/mm², als auch Methode B mit einer Randfaserspannung von 0,45 N/mm² verwendet wurde.

Die Ergebnisse sind in Tabelle 7 zu sehen.

Tabelle 7

| Beispiel | Charpy Schlagzähigkeit ungekerbt [kJ/m²] | Charpy Schlagzähigkeit gekerbt [kJ/m²] | Zugfestig-keit [MPa] | Zug-E-Modul [MPa] | Bruchdehnung [%] | HDT A [°C] | HDT B [°C] |
|---|---|---|---|---|---|---|---|
| V1 | 7 | 2,4 | 57,3 | 3425 | 1,81 | 94 | 179 |
| B2 | n.b.* | n.b.* | 59,7 | 3686 | 1,79 | n.b.* | n.b.* |
| n.b.*: nicht bestimmt | | | | | | | |

Die erfindungsgemäßen Sinterpulver zeigen eine gute SLS-Verarbeitbarkeit und einen geringen Verzug.

Nach Wärmelagerung an Luft bei 160 °C wurden nach 1000 Stunden nochmals die Zugfestigkeit, das Zug-E-Modul und die Bruchdehnung gemäß ISO 527-2 : 2012 bestimmt.

Die Ergebnisse sind in Tabelle 8 zu sehen.

Tabelle 8

| Beispiel | Zugfestigkeit [MPa] | Zug-E-Modul [MPa] | Bruchdehnung [%] |
|---|---|---|---|
| V1 | 9,5 | 3690 | 0,25 |
| B2 | 15,6 | 3880 | 0,4 |
| n.b.*: nicht bestimmt | | | |

Der erfindungsgemäße Sinterstab gemäß B2 zeigt nach Wärmelagerung eine deutlich höhere Zugfestigkeit (Faktor 1,6) und Bruchdehnung (ebenfalls Faktor 1,6) als der Sinterstab aus dem Vergleichsbeispiel V1.

**Patentansprüche**

1. Verfahren zur Herstellung eines Formkörpers, umfassend die Schritte:

   i) Bereitstellen einer Schicht eines Sinterpulvers (SP), das die Komponenten

   (A) mindestens ein teilkristallines Polyamid,
   (B) mindestens ein amorphes Polyamid,
   (C) mindestens einen mehrwertigen Alkohol,
   (D) gegebenenfalls mindestens ein Additiv,
   (E) gegebenenfalls mindestens ein Verstärkungsmittel und
   (F) gegebenenfalls mindestens ein mineralisches Flammschutzmittel

   enthält,
   ii) Belichten der in Schritt i) bereitgestellten Schicht des Sinterpulvers (SP).

2. Verfahren gemäß Anspruch 1, **dadurch gekennzeichnet, dass** die Komponente (C) ein zahlenmittleres Moleku-largewicht ($M_n$) von weniger als 2000 g/mol aufweist.

3. Verfahren gemäß Anspruch 1 oder 2, **dadurch gekennzeichnet, dass** die Komponente (C) ausgewählt ist aus der Gruppe bestehend aus Glycerin, Trimethylolpropan, 2,3-Di-(2'-Hydroxyethyl)-cyclohexan-1-ol, Hexan-1,2,6-triol, 1,1,1-Tris-(Hydroxymethyl)-ethan, 3-(2'-Hydroxyethoxy)-propan-1,2-diol, 3-(2'-Hydroxypropoxy)-propan-1,2-diol, 2-(2'-Hydroxyethoxy)-hexan-1,2-diol, 6-(2'-Hydroxypropoxy)-hexan-1,2-diol, 1,1,1-Tris-[(2'-Hydroxyethoxy)-methyl]-ethan, 1,1,1-Tris-[(2'-Hydroxypropoxy)-methyl]-propan, 1,1,1-Tris-(4'-Hydroxyphenyl)-ethan, 1,1,1-Tris-(Hydroxyphenyl)-propan, 1,1,3-Tris-(Dihydroxy-3-methylphenyl)-propan, 1,1,4-Tris-(Dihydroxyphenyl)-butan, 1,1,5-Tris-(Hydroxyphenyl)-3-methylpentan, Di-Trimethylol-propan, Trimethylolpropanethoxylate, Trimethylolpropanpropoxylate, Pentaerythritol, Di-Pentaerythritol, Tri-Pentaerythritol Cyclodextrine, D-Mannose, Glucose, Galactose, Sucrose, Fructose, Xylose, Arabinose, D-Manitol, D-Sorbitol, D-Arabitol, L-Arabitol, Xylitol, Idit, Talit, Allit, Altrit, Gulit, Erythritol, Threit und D-Gulonsäure-y-lacton.

4. Verfahren gemäß einem der Ansprüche 1 bis 3, **dadurch gekennzeichnet, dass** die Komponente (A) ausgewählt ist aus der Gruppe, bestehend aus PA 4, PA 6, PA 7, PA 8, PA 9, PA 11, PA 12, PA 46, PA 66, PA 69, PA 6.10, PA 6.12, PA 6.13, PA 6/6.36, PA 6T/6, PA 12.12, PA 13.13, PA 6T, PA MXD6, PA 6/66, PA 6/12 und Copolyamiden aus diesen.

5. Verfahren gemäß einem der Ansprüche 1 bis 4, **dadurch gekennzeichnet, dass** die Komponente (B) ausgewählt ist aus der Gruppe bestehend aus PA 6I/6T, PA 6I und PA 6/3T.

6. Verfahren gemäß einem der Ansprüche 1 bis 5, **dadurch gekennzeichnet, dass** die Komponente (B) mindestens 3 Gew.-% PA 6I/6T enthält, bezogen auf das Gesamtgewicht der Komponente (B).

7. Verfahren gemäß einem der Ansprüche 1 bis 6, **dadurch gekennzeichnet, dass** das Sinterpulver (SP) im Bereich von 35 bis 96,95 Gew.-% der Komponente (A), im Bereich von 3 bis 45 Gew.-% der Komponente (B), im Bereich von 0,05 bis 20 Gew.-% der Komponente (C), im Bereich von 0 bis 10 Gew.-% der Komponente (D), im Bereich von 0 bis 44,95 Gew.-% der Komponente (E) und im Bereich von 0 bis 60 Gew.-% der Komponente (F) enthält, jeweils bezogen auf das Gesamtgewicht des Sinterpulvers (SP).

8. Verfahren gemäß einem der Ansprüche 1 bis 7, **dadurch gekennzeichnet, dass** die Komponente (D) ausgewählt ist aus der Gruppe bestehend aus Antinukleierungsmitteln, Stabilisatoren, leitfähigen Additiven, Endgruppenfunktionalisierern, Farbstoffen und Farbpigmenten.

9. Verfahren gemäß einem der Ansprüche 1 bis 8, **dadurch gekennzeichnet, dass** die Komponente (E) ausgewählt ist aus der Gruppe bestehend aus Carbonnanotubes, Kohlenstofffasern, Borfasern, Glasfasern, Glaskugeln, Kieselsäurefasern, Keramikfasern, Basaltfasern, Aluminiumsilikaten, Aramidfasern und Polyesterfasern.

10. Verfahren gemäß einem der Ansprüche 1 bis 9, **dadurch gekennzeichnet, dass** die Komponente (F) auf Basis von Magnesium und/oder Aluminium ist.

11. Verfahren zur Herstellung eines Sinterpulvers (SP) gemäß einem der Ansprüche 1 bis 10, umfassend die Schritte

a) Bereitstellen der Komponenten

(A) mindestens ein teilkristallines Polyamid,
(B) mindestens ein amorphes Polyamid,
(C) mindestens einen mehrwertigen Alkohol,
(D) gegebenenfalls mindestens ein Additiv,
(E) gegebenenfalls mindestens ein Verstärkungsmittel und
(F) gegebenenfalls mindestens ein mineralisches Flammschutzmittel,

b) Mahlen der in Schritt a) erhaltenen Mischung unter Erhalt des Sinterpulvers (SP).

12. Sinterpulver (SP) erhältlich nach einem Verfahren gemäß Anspruch 11.

13. Verwendung eines Sinterpulvers (SP), das die Komponenten

(A) mindestens ein teilkristallines Polyamid,
(B) mindestens ein amorphes Polyamid,
(C) mindestens einen mehrwertigen Alkohol,

(D) gegebenenfalls mindestens ein Additiv,

(E) gegebenenfalls mindestens ein Verstärkungsmittel und

(F) gegebenenfalls mindestens ein mineralisches Flammschutzmittel

enthält, in einem Sinterverfahren.

**14.** Formkörper erhältlich nach einem Verfahren gemäß einem der Ansprüche 1 bis 10.

**15.** Sinterpulver, welches die Komponenten

(A) mindestens ein teilkristallines Polyamid,

(B) mindestens ein amorphes Polyamid,

(C) mindestens einen mehrwertigen Alkohol,

(D) gegebenenfalls mindestens ein Additiv,

(E) gegebenenfalls mindestens ein Verstärkungsmittel und

(F) gegebenenfalls mindestens ein mineralisches Flammschutzmittel

enthält.

**16.** Sinterpulver (SP) gemäß Anspruch 15, **dadurch gekennzeichnet, dass** es eine mittlere Partikelgröße ($D_{50}$-Wert) im Bereich von 40 bis 80 $\mu$m aufweist.

**Fig. 1**

Europäisches
Patentamt

European
Patent Office

Office européen
des brevets

**EUROPÄISCHER RECHERCHENBERICHT**

Nummer der Anmeldung

EP 18 18 0213

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2011/094553 A2 (DU PONT [US]; DOSHI SHAILESH [CA]; MATHEW ANNAKUTTY [CA]; MARTENS MARV) 4. August 2011 (2011-08-04) * siehe die Ansprüche und die Beispiele * ----- | 12,15 | INV. B29C67/00 |
| X,D | WO 2010/014801 A1 (DU PONT [US]; PALMER ROBERT J [FR]; PEACOCK JUDITH ALISON [CH]; TOPOUL) 4. Februar 2010 (2010-02-04) * siehe die Ansprüche und die Beispiele * ----- | 12,15 | |
| A | WO 2018/019727 A1 (BASF SE [DE]) 1. Februar 2018 (2018-02-01) * das ganze Dokument * ----- | 1-16 | |
| A | WO 2018/019728 A1 (BASF SE [DE]) 1. Februar 2018 (2018-02-01) * das ganze Dokument * ----- | 1-16 | |
| A | WO 2018/019730 A1 (BASF SE [DE]) 1. Februar 2018 (2018-02-01) * das ganze Dokument * ----- | 1-16 | RECHERCHIERTE SACHGEBIETE (IPC) |
| A,D | WO 96/06881 A2 (DTM CORP [US]) 7. März 1996 (1996-03-07) * das ganze Dokument * ----- | 1-16 | B29C |
| A | ROD R. JOSE ET AL: "Polyol-Silk Bioink Formulations as Two-Part Room-Temperature Curable Materials for 3D Printing", ACS BIOMATERIALS SCIENCE & ENGINEERING, Bd. 1, Nr. 9, 14. August 2015 (2015-08-14) , Seiten 780-788, XP055529744, US ISSN: 2373-9878, DOI: 10.1021/acsbiomaterials.5b00160 * das ganze Dokument * ----- | 1-16 | |

Der vorliegende Recherchenbericht wurde für alle Patentansprüche erstellt

| Recherchenort | Abschlußdatum der Recherche | Prüfer |
|---|---|---|
| München | 6. Dezember 2018 | Zellner, Armin |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 18 18 0213

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-12-2018

| Im Recherchenbericht angeführtes Patentdokument | Datum der Veröffentlichung | Mitglied(er) der Patentfamilie | | Datum der Veröffentlichung |
|---|---|---|---|---|
| WO 2011094553 A2 | 04-08-2011 | CN | 102712810 A | 03-10-2012 |
| | | EP | 2528973 A2 | 05-12-2012 |
| | | JP | 2013518175 A | 20-05-2013 |
| | | US | 2011190433 A1 | 04-08-2011 |
| | | WO | 2011094553 A2 | 04-08-2011 |
| WO 2010014801 A1 | 04-02-2010 | CA | 2725384 A1 | 04-02-2010 |
| | | CA | 2726010 A1 | 04-02-2010 |
| | | CN | 102112525 A | 29-06-2011 |
| | | CN | 102112526 A | 29-06-2011 |
| | | CN | 102112527 A | 29-06-2011 |
| | | CN | 102112545 A | 29-06-2011 |
| | | CN | 102112549 A | 29-06-2011 |
| | | CN | 102112550 A | 29-06-2011 |
| | | CN | 102112551 A | 29-06-2011 |
| | | EP | 2307480 A1 | 13-04-2011 |
| | | EP | 2307481 A1 | 13-04-2011 |
| | | EP | 2307482 A1 | 13-04-2011 |
| | | EP | 2307499 A2 | 13-04-2011 |
| | | EP | 2307502 A1 | 13-04-2011 |
| | | EP | 2307503 A1 | 13-04-2011 |
| | | EP | 2307504 A1 | 13-04-2011 |
| | | JP | 5475777 B2 | 16-04-2014 |
| | | JP | 5667054 B2 | 12-02-2015 |
| | | JP | 5677953 B2 | 25-02-2015 |
| | | JP | 6042064 B2 | 14-12-2016 |
| | | JP | 2011529986 A | 15-12-2011 |
| | | JP | 2011529987 A | 15-12-2011 |
| | | JP | 2011529988 A | 15-12-2011 |
| | | JP | 2011529989 A | 15-12-2011 |
| | | JP | 2011529990 A | 15-12-2011 |
| | | JP | 2011529991 A | 15-12-2011 |
| | | JP | 2011529993 A | 15-12-2011 |
| | | KR | 20110032001 A | 29-03-2011 |
| | | KR | 20110042091 A | 22-04-2011 |
| | | US | 2010028580 A1 | 04-02-2010 |
| | | US | 2010028581 A1 | 04-02-2010 |
| | | US | 2010029815 A1 | 04-02-2010 |
| | | US | 2010029819 A1 | 04-02-2010 |
| | | US | 2010029820 A1 | 04-02-2010 |
| | | US | 2010029821 A1 | 04-02-2010 |
| | | US | 2010029837 A1 | 04-02-2010 |
| | | US | 2012208954 A1 | 16-08-2012 |
| | | US | 2013053483 A1 | 28-02-2013 |
| | | US | 2013072608 A1 | 21-03-2013 |
| | | WO | 2010014785 A1 | 04-02-2010 |

Für nähere Einzelheiten zu diesem Anhang : siehe Amtsblatt des Europäischen Patentamts, Nr.12/82

EPO FORM P0461

Seite 1 von 2

**ANHANG ZUM EUROPÄISCHEN RECHERCHENBERICHT**
**ÜBER DIE EUROPÄISCHE PATENTANMELDUNG NR.**

EP 18 18 0213

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-12-2018

| Im Recherchenbericht angeführtes Patentdokument | Datum der Veröffentlichung | Mitglied(er) der Patentfamilie | Datum der Veröffentlichung |
|---|---|---|---|
| | | WO 2010014790 A1 | 04-02-2010 |
| | | WO 2010014791 A1 | 04-02-2010 |
| | | WO 2010014795 A1 | 04-02-2010 |
| | | WO 2010014796 A2 | 04-02-2010 |
| | | WO 2010014801 A1 | 04-02-2010 |
| | | WO 2010014810 A1 | 04-02-2010 |
| WO 2018019727 A1 | 01-02-2018 | TW 201817812 A | 16-05-2018 |
| | | WO 2018019727 A1 | 01-02-2018 |
| WO 2018019728 A1 | 01-02-2018 | TW 201821535 A | 16-06-2018 |
| | | WO 2018019728 A1 | 01-02-2018 |
| WO 2018019730 A1 | 01-02-2018 | TW 201821534 A | 16-06-2018 |
| | | WO 2018019730 A1 | 01-02-2018 |
| WO 9606881 A2 | 07-03-1996 | AU 709822 B2 | 09-09-1999 |
| | | BR 9509142 A | 25-11-1997 |
| | | CA 2197211 A1 | 07-03-1996 |
| | | EP 0784646 A2 | 23-07-1997 |
| | | JP 3621703 B2 | 16-02-2005 |
| | | JP H10505116 A | 19-05-1998 |
| | | JP 2005120347 A | 12-05-2005 |
| | | KR 100372192 B1 | 18-04-2003 |
| | | US 5527877 A | 18-06-1996 |
| | | WO 9606881 A2 | 07-03-1996 |

Für nähere Einzelheiten zu diesem Anhang : siehe Amtsblatt des Europäischen Patentamts, Nr.12/82

EPO FORM P0461

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6136948 A
- WO 9606881 A
- WO 2010014801 A1
- WO 2011094553 A2
- WO 2010014785 A1